# EUROPEAN PATENT SPECIFICATION

(11) **EP 3 454 197 B1**
(45) Date of publication and mention of the grant of the patent: **24.01.2024**
(21) Application number: 18192413.5
(22) Date of filing: 04.09.2018
(51) Int. Cl.: G06F 3/0488, G06F 3/04886

(54) **METHOD, DEVICE, AND NON-TRANSITORY COMPUTER-READABLE STORAGE MEDIUM FOR SWITCHING PAGES OF APPLICATIONS IN A TERMINAL DEVICE**
VERFAHREN, VORRICHTUNG UND NICHTTRANSITORISCHES COMPUTERLESBARES SPEICHERMEDIUM ZUR UMSCHALTUNG VON SEITEN VON ANWENDUNGEN IN EINER ENDGERÄTEVORRICHTUNG
PROCÉDÉ, DISPOSITIF, ET SUPPORT DE STOCKAGE LISIBLE PAR ORDINATEUR NON TRANSITOIRE POUR COMMUTER DES PAGES D'APPLICATIONS DANS UN DISPOSITIF TERMINAL

(30) Priority: 07.09.2017 CN 201710801799
(43) Date of publication of application: 13.03.2019
(73) Proprietor: Beijing Xiaomi Mobile Software Co., Ltd., Beijing 100085 (CN)
(72) Inventor: LI, Jiayan, Haidian District, Beijing 100085 (CN)
(74) Representative: Dewhurst, Joseph Michael

(56) References cited:
- WO-A2-2009/097555
- CN-A- 105 094 549
- US-A1- 2016 253 089

## Description

### TECHNICAL FIELD

The present disclosure relates to the field of computer technology, and in particular to a method, a device, and non-transitory computer-readable storage medium for switching pages of applications in a terminal device.

### BACKGROUND

With the widespread use of mobile terminals, the number of applications that provide information to users is also increasing. In order to view unread messages for different applications, a user may often need to switch pages of different applications.

When an unread message exits in an application A in a mobile terminal, the application A displays a notification message in a notification bar. The user needs to pull down the notification bar and click the notification banner of the unread message for the application A in the notification bar. Accordingly, an operating system opens the application A and displays a page containing the unread message. In this case, when the user needs to view the unread message for an application B, the user needs to click a home button in a navigation bar to return to the desktop of the mobile terminal, and then click the icon of the application B, so that the mobile terminal displays a page containing the unread message for the application B.

WO 2009/097555 discloses a computer-implemented user notification method comprising displaying, in a status area near a perimeter of a graphical interface, a notification of a recent alert event for a mobile device, receiving a user selection in the status area, and in response to the receipt of the user selection, displaying, in a central zone of the graphical interface, detail regarding a plurality of recent messaging events for the mobile device.

US 2016/253089 discloses a method for displaying information by an electronic device comprising displaying a first information display area on a touch screen in response to a first user input received through a first part in some areas of the touch screen including the first part and a second part connected or adjacent to the first part, displaying a second information display area on the touch screen in response to a second user input received through the second part, displaying first information received from outside of the electronic device in the first information display area, the first information being associated with first contact information, and displaying second information received from the outside of the electronic device in the second information display area, the second information being associated with second contact information.

### SUMMARY

The present disclosure provides a method and a device for switching pages of applications in a terminal device. The invention is defined by the independent claims. Further aspects of the invention are outlined in the dependent claims.

In a first aspect of the present disclosure, there is provided a method for switching pages of applications in a terminal device. The method may include: displaying a virtual system bar and a first application page of a first application on a terminal device, where the virtual system bar is a display area located on an edge of a screen of the terminal device, and the first application page is used to display a first unread message for the first application; and displaying a page display control in the virtual system bar when a second unread message exists in a second application, where the page display control corresponds to a second contact who sends the second unread message.

The method may also include receiving a first signal which is generated in accordance with a first designated operation performed on the page display control; and switching the first application page into a second application page corresponding to the page display control in accordance with the first signal for display, where the second application page is used to display the second unread message corresponding to the page display control; wherein displaying the virtual system bar and the first application page of the first application on the terminal device comprises: displaying a hint control on a side of the screen of the terminal device when the first unread message is received, wherein the hint control is used to indicate that the first unread message exists in the first application; receiving a second signal which is generated in accordance with a second designated operation performed on the hint control; and displaying the virtual system bar and the first application page in accordance with the second signal.

In a second aspect of the present disclosure, there is provided a device for switching pages of applications in a terminal device. The device may include: a processor; and a memory for storing instructions executable by the processor; where the processor may be configured to: display a virtual system bar and a first application page of a first application of the device, where the virtual system bar is a display area located on an edge of a screen of the device, and the first application page is used to display a first unread message for the first application; display a page display control in the virtual system bar when a second unread message exists in a second application, where the page display control corresponds to a second contact who sends the second unread message.

The processor may be further configured to receive a first signal which is generated in accordance with a first designated operation performed on the page display control; and switch the first application page into a second application page corresponding to the page display control in accordance with the first signal for display, where the second application page is used to display the second unread message corresponding to the page display control; wherein displaying the virtual system bar and the first application page of the first application on the terminal device comprises: displaying a hint control on a side of the screen of the terminal device when the first unread message is received, wherein the hint control is used to indicate that the first unread message exists in the first application; receiving a second signal which is generated in accordance with a second designated operation performed on the hint control; and displaying the virtual system bar and the first application page in accordance with the second signal.

In a third aspect of the present disclosure, there is provided a non-transitory computer-readable storage medium having stored therein at least one instruction that may be loaded and executed by a processor to implement: displaying a virtual system bar and a first application page of a first application on a terminal device, where the virtual system bar is a display area located on an edge of a screen of the terminal device, and the first application page is used to display a first unread message for the first application; displaying a page display control in the virtual system bar when a second unread message exists in a second application, where the page display control corresponds to a second contact who sends the second unread message; receiving a first signal which is generated in accordance with a first designated operation performed on the page display control; and switching the first application page into a second application page corresponding to the page display control in accordance with the first signal for display, where the second application page is used to display the second unread message corresponding to the page display control; wherein displaying the virtual system bar and the first application page of the first application on the terminal device comprises: displaying a hint control on a side of the screen of the terminal device when the first unread message is received, wherein the hint control is used to indicate that the first unread message exists in the first application; receiving a second signal which is generated in accordance with a second designated operation performed on the hint control; and displaying the virtual system bar and the first application page in accordance with the second signal.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate examples consistent with the present disclosure and, together with the description, serve to explain the principles of the present disclosure.
Fig. 1 is a flow chart of a method for switching pages provided in an example of the present disclosure;
Fig. 2 is a flow chart of a method for switching pages provided in an example of the present disclosure;
Fig. 3A is a diagram of displaying a hint control based on the example shown in Fig. 2;
Fig. 3B is a diagram of closing a hint control based on the example shown in Fig. 2;
Fig. 3C is a diagram of switching pages based on the example shown in Fig. 2;
Fig. 4A is a flow chart of a method for displaying a page in full screen provided in an example of the present disclosure;
Fig. 4B is a diagram of displaying a page in full screen based on the example shown in Fig. 4A;
Fig. 5A is a flow chart of a method for displaying pages in multiple screens provided in an example of the present disclosure;
Fig. 5B is a diagram of displaying pages in multiple screens based on the example shown in Fig. 5A;
Fig. 6 is a block diagram of a structure of a device for switching pages shown in an example of the present disclosure;
Fig. 7 is a block diagram of a structure of another device for switching pages shown in an example of the present disclosure;
Fig. 8 is a block diagram of a device 800 shown in an example of the present disclosure.

### DETAILED DESCRIPTION

Reference will now be made in detail, examples of which are illustrated in the accompanying drawings. The following description refers to the accompanying drawings in which the same numbers in different drawings represent the same or similar elements unless otherwise represented. The implementations set forth in the following description of examples do not represent all implementations consistent with the present disclosure. Instead, they are merely examples of devices and methods consistent with aspects related to the present disclosure.

The terminology used in the present disclosure is for the purpose of describing exemplary examples only and is not intended to limit the present disclosure. As used in the present disclosure and the appended claims, the singular forms "a," "an" and "the" are intended to include the plural forms as well, unless the context clearly indicates otherwise. It shall also be understood that the terms "or" and "and/or" used herein are intended to signify and include any or all possible combinations of one or more of the associated listed items, unless the context clearly indicates otherwise.

It shall be understood that, although the terms "first," "second," "third," and the like may be used herein to describe various information, the information should not be limited by these terms. These terms are only used to distinguish one category of information from another. For example, without departing from the scope of the present disclosure, first information may be termed as second information; and similarly, second information may also be termed as first information. As used herein, the term "if' may be understood to mean "when" or "upon" or "in response to" depending on the context.

The "module" mentioned in the text refers to a program or instruction that is stored in a memory and may achieve some functions. The term "plurality" herein refers to two or more. "And/or" herein describes the correspondence of the corresponding objects, indicating three kinds of relationship. For example, A and/or B, may be expressed as: A exists alone, A and B exist concurrently, B exists alone. The character "/" generally indicates that the context object is an "OR" relationship.

For convenience of understanding, the terms involved in the examples of the present disclosure are explained below.

A virtual system bar may be a bar-shaped display area located on the edge of a screen of a terminal device. In some examples, the virtual system bar may be a status bar displayed on the top edge of the screen, or a navigation bar displayed on the bottom edge of the screen, or other virtual system bar other than the status bar and the navigation bar, for example, a virtual system bar displayed close to the bottom edge of the status bar.

It should be noted that other virtual system bars may be displayed simultaneously together with the status bar and/or the navigation bar. In the example of the present disclosure, controls displayed in the virtual system bar include page display controls. Each page display control corresponds to a second application page. Each application page belongs to a contact and is used to display the unread message sent by the contact. In some examples, a first display control may be further displayed in the virtual system bar. The first display control corresponds to a first contact who sends the first unread message. Correspondingly, the first contact is a contact who sends the first unread message in a first application.

For example, a page display control A1, a page display control A2 and a page display control A3 are displayed in the virtual system bar. When the page display control A1 is in a selected state (i.e., the selection cursor stays on the page display control A1), the operating system displays an application page corresponding to the page display control A1 in the screen. When a user selects the page display control A2 (i.e., the selection cursor is moved to the page display control A2), the operating system displays an application page corresponding to the page display control A2 in the screen. The page display control A1 and the page display control A2 may correspond to different applications or the same application. After the user selects the page display control A2, the virtual system bar may be displayed in the screen as a resident display, such that the user may switch back to the page corresponding to the page display control A1 or switch to a page corresponding to the page display control A3.

In some examples, when the virtual system bar is displayed in the screen, in case where a new page containing an unread message appears, in the example of the present disclosure, a display control A4 that displays the new page may be added in the virtual system bar, such that the user may directly switch to the new page containing the unread message for display by triggering the page display control A4.

In some examples, in order to save the display space of the virtual system bar, after the user views the page containing the unread message and switches the page out, the page display control corresponding to the page may be deleted in the present disclosure. For example, when the virtual system bar is a status bar or a navigation bar, the status bar or the navigation bar no longer displays the page display control. When the virtual system bar is other virtual system bar other than the status bar or the navigation bar, the virtual system bar may be closed when there is no page display control therein, such that the screen display area is no longer occupied so as to improve the screen utilization efficiency of the terminal device.

In the example of the present disclosure, the method for switching pages may be applied in a terminal device. The terminal device may include a smart phone, a tablet PC, an e-book reader, a MP3 (Moving Picture Experts Group Audio Layer III) player, a MP4 (Moving Picture Experts Group Audio Layer IV) player, a laptop computer, a desktop computer, or the like. In some examples, an operating system that provides the virtual system bar operates in the terminal device. The operating system includes but is not limited to an Android system or a custom system developed based on the Android system.

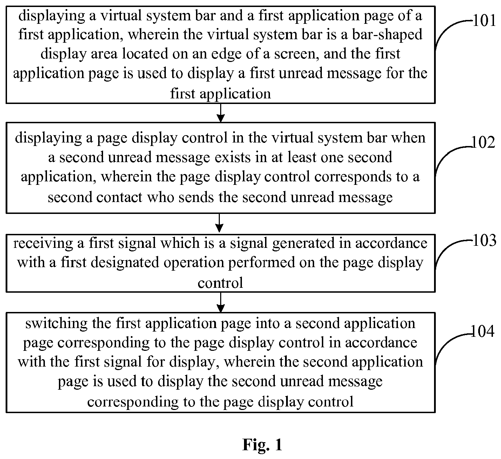

Referring to Fig. 1, which shows a flow chart of a method for switching pages provided in an example of the present disclosure. The method may be applied in the terminal device above. The virtual system bar may be a navigation bar, a status bar or other virtual system bar. For the convenience of description, the example as shown in Fig. 1 will be described by taking an example in which the virtual system bar is a virtual system bar other than the navigation bar and the status bar. As shown in Fig. 1, the method for switching pages may include the following steps.

In Step 101, a virtual system bar and a first application page of a first application are displayed, where the virtual system bar is a bar-shaped display area located on the edge of a screen, and the first application page is used to display a first unread message for the first application.

In the example of the present disclosure, the method for switching pages may be implemented by an operating system. The method for switching pages may be accomplished by executing instructions or instruction sets of an operating system level. A first application which has a function of providing information to a user may be installed in the operating system. When a page containing the message is not displayed in the screen, the operating system identifies the message as an unread message for the first application.

In some examples, the first application may be at least one of a social application, a news application, a video application and a music application. It should be noted that, the above categories for the first application are merely exemplary descriptions for the sake of easy understanding, rather than limiting other categories that may be implemented by the first application of the present disclosure. Correspondingly, the first unread message may be at least one of an unread chat message and/or unviewed blog content, unread news, an unviewed video and unheard music.

When the operating system operates normally and an unread message appears on a first application page, the operating system may determine the execution process of displaying the virtual system bar and the first application page in accordance with the operating status of the terminal device. First, the operating system detects the operating status of the terminal device, including a screen unlocked status and a screen locked status.

In a possible implementation, when the terminal device is in the screen unlocked status, the operating system may directly display the virtual system bar and the first application page of the first application. If the virtual system bar is displayed in the screen of the terminal device as a resident display, the operating system directly displays the first application page.

In another possible implementation, when the terminal device is in the screen locked status, the operating system may not execute this step. After the terminal device is unlocked (i.e., changed from the screen locked status to the screen unlocked state), the operating system starts to execute this step.

In Step 102, when a second unread message exists in at least one second application, a page display control is displayed in the virtual system bar, where the page display control corresponds to a second contact who sends the second unread message.

The operating system continuously monitors whether the second unread message exists in the installed second application. The second application is a pre-designated application that may be set by a user, an operating system provider, or other server. For example, the second application may be set in a "setting" option of the terminal device. The operating system may select, for the user, all installed applications as the candidates for the second application. In some examples, the operating system may also predetermine, among all the installed applications, a part of the applications that support the method for switching pages in the example of the present disclosure as the candidates for the second application. In some examples, the number of the second application may be at least one.

When the operating system monitors that the second unread message exists in the second application, the operating system displays the page display control in the virtual system bar. Each page display control corresponds to a second contact who sends the second unread message. For example, Zhang San, a contact of a chat application A, consecutively sends three chat messages, all of which are unread messages, and the operating system will display the head portrait (icon) of the contact (Zhang San) in the virtual system bar.

In some examples, due to the existence of the second unread message, there are at least two contacts in the virtual system bar, and then the operating system may display the first display control corresponding to the contact who sends the first unread message. If the first display control corresponding to the contact who sends the first unread message has already been displayed in the virtual system bar, the operating system directly displays the page display control corresponding to the second contact who sends the second unread message. For example, taking the page display control being a head portrait of a contact as an example, the first unread message is a chat message sent by Li Si, and the page containing the first unread message is displayed in the screen. When the operating system has not detected the second unread message, the virtual system bar may display Li Si's head portrait or may not display Li Si's head portrait. When Li Si's head portrait is displayed in the virtual system bar, the operating system directly displays the head portrait of the contact who sends the second unread message in the virtual system bar in case of detecting the second unread message. When Li Si's head portrait is not displayed in the virtual system bar, the operating system displays Li Si's head portrait and the head portrait of the contact who sends the second unread message in the virtual system bar at the same time in case of detecting the second unread message.

In some examples, an icon of the second application may be displayed at a designated position of the page display control. The designated position may be one of the top left corner, the bottom left corner, the top right corner, and the bottom right corner of the page display control.

In some examples, the border of the page display control may be displayed as the main color of the application icon of the second application, and the main color is the color occupying the largest area in the application icon of the second application.

In Step 103, a first signal is received, where the first signal is a signal generated in accordance with a first designated operation performed on the page display control.

In the example of the present disclosure, the operating system receives the first signal which is generated in accordance with the first designated operation performed on the page display control. In some examples, the first designated operation may be a click operation (short touch) or a long press operation that may trigger the page display control.

In some examples, for a terminal device capable of distinguishing the pressing pressure, the first designated operation may also be a tap press, a heavy press, or the like.

In some examples, for a terminal device capable of distinguishing a palm operation, a hand back operation or a knuckle operation, the first designated operation may also be the palm operation, the hand back operation or the knuckle operation.

In Step 104, the first application page is switched into a second application page corresponding to the page display control for display in accordance with the first signal, where the second application page is used to display the second unread message corresponding to the page display control.

In the example of the present disclosure, the currently displayed first application page is switched into the second application page corresponding to the page display control for display in accordance with the first signal. The second unread message is displayed in the second application page. For example, the head portrait of the contact Li Si, who sends the first unread message and the head portrait of the contact Zhang San, who sends the second unread message, are displayed in the virtual system bar. The first application page containing the first unread message is displayed in the screen. When detecting an operation of clicking on the head portrait of Zhang San, the operating system switches the first application page containing the first unread message into the second application page containing the second unread message for display. It should be noted that, when the page displayed in the screen is the first application page, the operating system will not switch the page when the user clicks the head portrait of Li Si.

In some examples, when the first display control is triggered by a user's operation, the terminal device may not perform the operation for switching pages as the first application page has already been displayed in the screen of the terminal device.

In summary, there is provided a method for switching pages in the example of the present disclosure. By displaying the virtual system bar and the first application page for displaying the first unread message for the first application, when a second unread message exists in the at least one second application, the page display control is displayed in the virtual system bar, and the first signal generated in accordance with the first designated operation performed on the page display control is received. The first application page is switched into the second application page which corresponds to the page display control and serves to display the second unread message for display. Since the virtual system bar is displayed together with the first application page and the page display control of the second application page is displayed in the virtual system bar, the user may directly switch from the first application page of the first application to the second application page of the second application, thereby saving the multi-step operation of switching application pages across applications for the user, improving the efficiency of the user in viewing unread messages for different applications, and also improving the switching efficiency among pages of different applications.

In the method for switching pages provided in the example of the present disclosure, before the operating system displays the first application page on the screen, a start page is displayed on the screen. The start page may be a page in an application in the operating system, or a system page provided by the operating system. The page in the application may be a page in a user-installed application or a page in a system application such as a call page, a text message page and a setting page provided in the system. The system page may be a home screen page, a hiboard screen page, or the like.

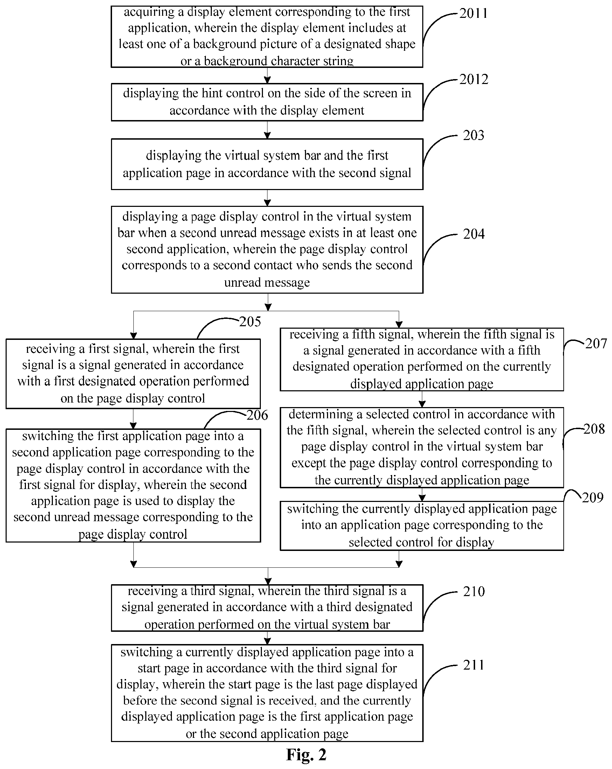

Based on the method for switching pages provided in Fig. 1, in order to reduce the influence and abruptness that the start page is sheltered when the user directly switches from the start page to the first application page for display, an example of the present disclosure further provides another method for switching pages. Referring to Fig. 2, which shows a flow chart of a method for switching pages provided in the example of the present disclosure. The method may be applied in the terminal device above. As shown in Fig. 2, the method for switching pages may comprise the following steps.

In Step 201, a hint control is displayed on the side of a screen when a first unread message is received, where the first hint control indicates that the first unread message exists in the first application.

In the example of the present disclosure, the operating system may display a hint control on the side of a screen first when the first unread message is received. The hint control indicates that the unread message exists in the first application. The hint control may appear on the side of the screen in the form of an attractive pop-up animation, such as blinking, jumping, sliding out, or fading in. In some examples, the hint control may also be accompanied by a beep when it appears. In some examples, when the terminal device is equipped with an indicator light, the indicator light may also blink or emit light with a designated color when the hint control appears.

In some examples, the display height of the hint control on the side of the screen may be set by the user autonomously. The user may drag the hint control to a designated position on the side of the screen, or the user may also set the display height of the hint control on the side of the screen in a setting menu.

In some examples, the operating system acquires a displayed duration of the hint control. The displayed duration is a time duration that has elapsed from a moment when the hint control starts to be displayed on the screen to a current system time. When the displayed duration is not less than a predetermined duration, the hint control is hidden.

In some examples, the predetermined duration corresponding to the continuous display time of the hint control on the side of the screen may be set by the user autonomously or by the system by default. For example, the predetermined duration may be a time duration of 5 seconds, 10 seconds, 15 seconds, or other lengths. The predetermined duration may also be changed to infinity, which is resident display. The user may set, in the setting option, that the hint control is displayed on the side of the screen as a resident display.

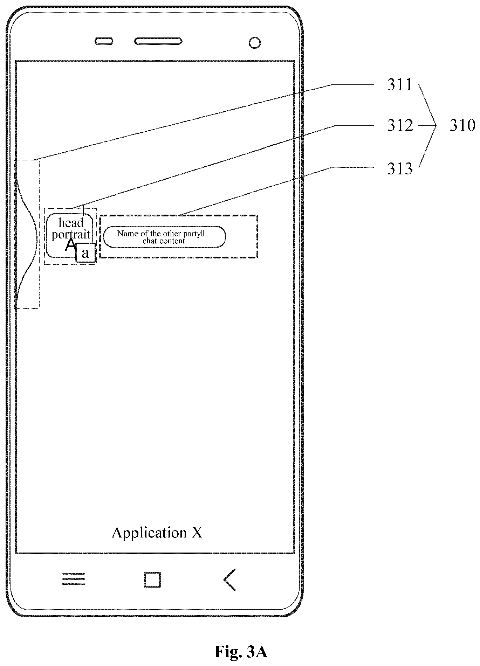

It should be noted that the hint control includes three blocks, i.e., a first block, a second block, and a third block. The first block may be used to display the identifier of the first application. The second block is used to display an icon of a first contact. The third block may be used to display all or part of the information content of first unread information. Fig. 3A is a schematic diagram of displaying a hint control in the example shown in Fig. 2. In Fig. 3A, the hint control 310 is composed of a first block 311, a second block 312 and a third block 313. Under different display conditions, the operating system may control the hint control to display different blocks.

For example, in Fig. 3A, the operating system may determine the block to be displayed in accordance with the granularity of the information to be hinted. When the granularity of the hinted information only needs to hint which first application has a new unread message, the hint control 310 may only display the first block 311. When the granularity of the hinted information needs to indicate which contact in the first application sends a new message, the hint control may display the first block 311 and the second block 312 at the same time. When the granularity of the hinted information needs to indicate which contact in the first application sends part or all of the content of the first unread message, the hint control may display the first block 311, the second block 312 and the third block 313 at the same time.

In the example of the present disclosure, this step may be replaced by Steps 2011 and 2012 to implement the operation of displaying the hint control on the side of the screen.

In Step 2011, a display element corresponding to the first application is acquired, where the display element includes at least one of a background picture of a designated shape or a background character string.

In the example of the present disclosure, the operating system may acquire the display element corresponding to the first application. The display element may include a background picture which may be at least one of a solid color background picture, a static background picture or a dynamic background picture. The background character string identifies the first application. It should be noted that the background picture has a designated shape which may be the same shape as the display area of the background picture.

For example, when the first application is a chat application A, the background picture may be a background picture which is provided by the chat application A and contains an image of the identifier of the chat application A. For example, if the icon of the chat application A contains a figure of a cartoon rabbit B, the background picture may contain the figure of the cartoon rabbit B. In addition, the background character string may include the full name, the short name, the Chinese name or the English name of the chat application A.

In some examples, the operating system may acquire the display element through an Application Interface (API) provided by the first application.

In some examples, the operating system may also acquire the display element in accordance with the application icon of the first application. When the operating system acquires the display element in accordance with the application icon of the first application, the operating system may acquire the application icon of the first application first.

The application icon may be a theme icon of the first application under the current display theme of the terminal device or a native icon of the first application at the time of installation. For example, when the terminal device is a mobile phone, the user using the mobile phone may autonomously select a mobile phone theme, for example, a personal theme such as a summer theme, a classic theme and a cartoon theme. For different mobile phone themes, the theme icons corresponding to the same first application are different. For example, for the summer theme, the theme icon of the first application may be a watermelon pattern. For the classic theme, the theme icon of the first application may be a lantern pattern. For the cartoon theme, the theme icon of the first application may be a pattern of a cartoon character. Meanwhile, the first application has a native icon at the time of installation, and the icon is unique and does not change as the mobile phone theme changes. It should be noted that the operating system in the present disclosure may acquire the application icon of the first application in accordance with the settings of the user or others and determine the theme icon or the native icon as the application icon of the display element.

In some examples, after acquiring the application icon of the first application, the operating system may perform color analysis on the application icon to determine the color occupying the largest area in the application icon as the color of the solid color background picture and take the solid color background picture as the display element. In some examples, after acquiring the color occupying the largest area, the operating system may also detect this color. This color is considered as the color of the solid color background picture if it is not an interference color. The interference color may be set by a user or a developer of the operating system. For example, the interference color may be set by the developer of the operating system as white and black.

In some examples, in case of detecting that the color occupying the largest area in the application icon is the interference color, the operating system continues to detect whether a color occupying the second largest area is the interference color. The color occupying the second largest area is taken as the background of the solid color background picture when it is not the interference color. In some examples, when the color occupying the second largest area is also the interference color, the operating system may, directly acquire the application icon and take the application icon as the background picture of the display element instead of acquiring the color of the solid color background picture from the application icon.

In Step 2012, the hint control is displayed on the side of the screen in accordance with the display element.

In the example of the present disclosure, the operating system may display the picture or the character string of the display element at a designated position of the hint control as a background.

In some examples, the hint control includes an icon of a first contact, the identifier of the first application, and all or part of the content of the first unread message. The first contact sends the first unread message.

In a possible implementation, the hint control includes a first block. The operating system fills the background of the first block with the display element. The first block is used to display the identifier of the first application.

In some examples, when the display element is a solid color background picture, the operating system may acquire the main color of the application icon of the first application. The main color is a color with the highest proportion among colors of the application icon. The operating system determines the main color as the color of the solid color background picture.

In some examples, the operating system may also detect whether the main color belongs to the interference color before the main color is determined as the color of the solid color background picture. When the main color does not belong to the interference color, the main color is determined as the color of the solid color background picture. The interference color is the color designated by the developer of the operating system or the user.

In another possible implementation, the hint control further includes a second block. The second block is used to display the icon of the first contact. The process of displaying the hint control on the side of the screen by the operating system may include following steps. The operating system determines the page information of the currently displayed application page, where the page information indicates the position where each part of the content of the application page is designated to be displayed. The operating system determines a second area for displaying the second block in accordance with the page information. The operating system displays the second block in the second area, and displays an icon of a contact in at least one first application in the second block.

In some examples, the icon of the contact may be at least one of a head portrait, a nickname or a note name.

In some examples, when the display element is a solid color background picture, the operating system may further acquire the color of the solid color background picture prior to displaying the second block, and display the border of the second block in accordance with the color of the solid color background picture.

In some examples, the operating system may display the identifier of the first application in a designated area on a head portrait of a contact.

In some examples, the designated area on the head portrait of the contact may be a corner of the head portrait. The corner may be one of the top left corner, the bottom left corner, the top right corner, or the bottom right corner.

In yet another possible implementation, the hint control includes a third block. The third block is used to display all or part of the content of the first unread message. The above operation of displaying the hint control on the side of the screen may be implemented through the following steps: acquiring the first unread message from the first application; determining the page information of the currently displayed application page; determining a third area for displaying the third block in accordance with the page information; and displaying the third block in the third area.

In Step 202, a second signal is received, where the second signal is a signal generated in accordance with a second designated operation performed on the hint control.

In the example of the present disclosure, the second operation may be a short touch (click operation), a long touch, a leftward slide, a rightward slide, an upward slide, or a downward slide. For example, the hint control is displayed on the left side of the screen, and the second operation may be preferentially set to be a rightward slide operation (pressing and dragging rightwards) and/or a short touch operation (click operation).

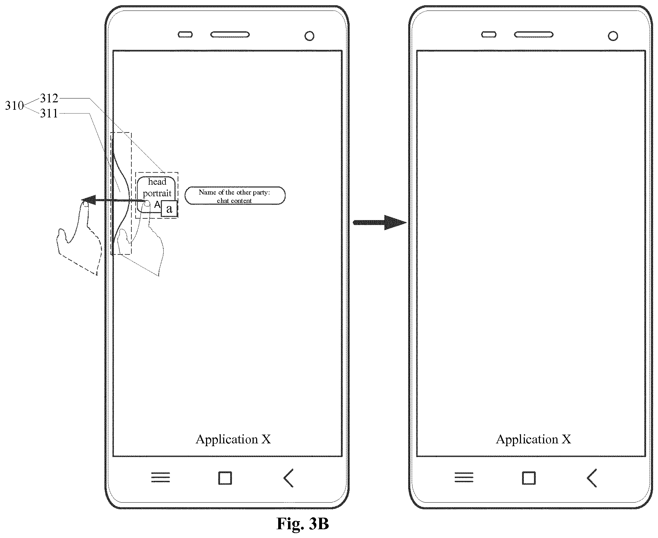

Referring to Fig. 3B, which shows a schematic diagram of closing a hint control shown in the example in Fig. 2. In Fig. 3B, the hint control 310 is displayed on the left side of the screen. The hint control 310 stop being displayed on the side of the screen when the hint control 310 is slid leftwards (pressing and dragging leftwards) or subject to other preset closing operations. In some examples, the hint control 310 may also be displayed on the right side of the screen, and the specific display position may be set by the user. The way the user sets the display position may be as follows: dragging the hint control to a designated side position and enabling the hint control to be displayed close to the designated position. Subsequently, when a new first unread message appears, the operating system displays the hint control on the newly set side position.

In some examples, for the terminal device capable of distinguishing the pressing pressure, the second designated operation may also be a tap press, a heavy press, or the like.

When the above-mentioned second designated operation is detected, the operating system may receive a second signal generated in accordance with the second designated operation.

In Step 203, the virtual system bar and the first application page are displayed in accordance with the second signal.

In the example of the present disclosure, the operation of displaying the virtual system bar and the first application page may be the same as that of the execution process of Step 101. For details, reference may be made to the execution process of Step 101, which are not described herein again.

In Step 204, a page display control is displayed in the virtual system bar when a second unread message exists in at least one second application. The page display control corresponds to a second contact who sends the second unread message.

The execution process of Step 204 may be the same as that of Step 102. For details, reference may be made to the execution process of Step 102, which are not described herein again.

The operating system may execute Step 205 and Step 206 or execute Step 207, Step 208 and Step 209 after executing Step 204.

In Step 205, a first signal is received. The first signal is a signal generated in accordance with a first designated operation performed on the page display control.

The execution process of Step 205 may be the same as that of Step 103. For details, reference may be made to the execution process of Step 103, which are not described herein again.

In Step 206, the first application page is switched into a second application page corresponding to the page display control in accordance with the first signal for display. The second application page is used to display the second unread message corresponding to the page display control.

The execution process of Step 206 may be the same as that of Step 104. For details, reference may be made to the execution process of Step 104, which are not described herein again.

In some examples, in the course of executing this step, the first display control may also be displayed in the virtual system bar. After the execution of Step 206 is completed, the operating system may freely switch the pages displayed on the screen in accordance with the operation of the user to trigger the first display control or the page display control. For example, a first display control c1, a page display control c2 and a page display control c3 are displayed in the virtual system bar. The currently displayed application page on the screen is a page corresponding to the first display control c1. When the user triggers the page display control c2, the screen will be switched into an application page corresponding to the page display control c2 for display. Here, if the user triggers the first display control c1, the application page corresponding to the first display control c1 is restored to be displayed on the screen; if the user triggers the page display control c3, an application page corresponding to the page display control c3 is displayed on the screen. It may thus be seen that the user may switch different application pages by triggering the corresponding controls in the virtual bar. The application pages may belong to different applications, or the same application.

It should be noted that when both the first application and the second application are chat applications, the first application and the second application should log in one user account respectively, and the operating system receives the unread message in accordance with the user account.

In Step 207, a fifth signal is received. The fifth signal is a signal generated in accordance with a fifth designated operation performed on the currently displayed application page.

In the example of the present disclosure, the operating system receives the fifth signal which is the signal generated in accordance with the fifth designated operation performed on the currently displayed application page. In some examples, the fifth designated operation may be an operation of sliding leftwards or rightwards.

In Step 208, a selected control is determined in accordance with the fifth signal. The selected control is any page display control in the virtual system bar except the page display control corresponding to the currently displayed application page.

In the example of the present disclosure, the operating system determines the selected control in accordance with the fifth signal. The selected control is any page display control in the virtual system bar except the page display control corresponding to the currently displayed application page.

In some examples, the operating system may determine the selected control in accordance with the fifth signal. For example, the operating system may only identify a direction indicated by the fifth signal. When the fifth signal indicates a leftward direction, the operating system determines that the selected control is a page display control adjacent to the left side of the page display control corresponding to the currently displayed application page. When the fifth signal indicates a rightward direction, the operating system determines that the selected control is a page display control adjacent to the right side of the page display control corresponding to the currently displayed application page.

In some examples, after the direction indicated by the fifth signal is determined, the operating system may also determine the moving distance in the indicated direction in accordance with the speed, distance or other operating parameters of the fifth designated operation reflected by the fifth signal. For example, there are three page display controls on the left side of the currently selected control, and there are two page display controls on the right side of the currently selected control. The operating system may determine, in accordance with the fifth signal, which direction of the currently selected control the selected control is in and the adjacent distance between selected control and the currently selected control.

In Step 209, the currently displayed application page is switched into an application page corresponding to the selected control for display.

In the example of the present disclosure, the operating system switches the currently displayed application page into the application page corresponding to the selected control for display.

In Step 210, a third signal is received. The third signal is a signal generated in accordance with a third designated operation performed on the virtual system bar.

In the present disclosure, the third designated operation may be an operation of clicking a blank area in the virtual system bar. In some examples, a close button is displayed in the virtual system bar, and the third designated operation may also be an operation of triggering the close button.

In Step 211, a currently displayed application page is switched into a start page in accordance with the third signal for display. The start page is the last page displayed before the second signal is received, and the currently displayed application page is the first application page or the second application page.

In this step, the operating system closes the currently displayed application page in accordance with the third signal and redisplays the last page (start page) displayed before the second signal is received on the screen. In some examples, the start page may be always displayed below the currently displayed application page as a resident display. When the application page displayed above is closed, the start page is redisplayed at the uppermost layer of the screen.

For example, an application scenario that may be implemented in the present disclosure will be introduced by taking an example in which the terminal device is a mobile phone, the first application is a chat application A including a contact a1 and a contact a2, and the second application is a chat application B including a contact b1, a contact b2, and a contact b3.

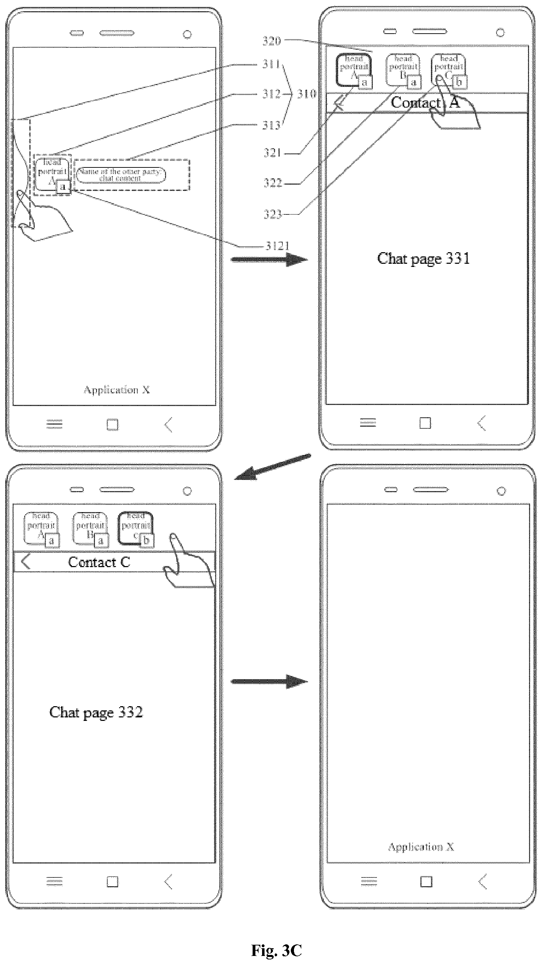

Referring to Fig. 3C, which is a schematic diagram of switching pages based on the example shown in Fig. 2. In Fig. 3C, when the chat application A in the mobile phone receives an unread message sent from the contact a1, the operating system acquires the application icon of the chat application A first in case of detecting that the mobile phone is in a screen unlocked state. Since the main color of the application icon of the chat application A is green, when the operating system displays the hint control 310 on the side of the screen, the solid color background picture of the first block 311 is green and the border of the second block 312 is also green. Meanwhile, the head portrait of the contact a1 is displayed in the second block 312, and the application icon of the chat application A is displayed at the bottom right corner 3121 of the second block. All or part of the content of the first unread message provided by the chat application is displayed in the third block 313. In some examples, the third block 313 may be a block in the hint control 310 which appears first, for the purpose of shortening the time of covering other displayed content on the screen as much as possible. The second block 312 and the first block 311 may be hidden when not being operated for a predetermined time based on the user's settings. For example, the third block 313 is hidden after three seconds from the moment the hint control 310 is displayed, and the first block 311 and the second block 312 may be hidden after ten seconds from the moment the hint control 310 is displayed. Alternatively, when the first block 311 is slid leftwards by the user, if the hint control 310 is triggered, the hint control 310 is hidden and the virtual system bar 320 is displayed. The page display control 321 corresponding to the contact a1 is displayed in the virtual system bar 320. Here, the operating system detects that the messages sent by the contact a2 and the contact b1 are also unread messages, and thus displays the page display control 322 corresponding to the contact a2 and the page display control 323 corresponding to the contact b1 in the virtual system bar 320. In the meantime, a chat page 331 with the contact a1 in the chat application A is displayed in parallel with the virtual system bar 320. The first unread message is displayed on the chat page 331. In this case, at least two ways for switching pages are available to the user to switch the mobile phone from the chat page 331 to the chat page 332 (corresponding to the page display control 323) with the contact b1 in the chat application B.

In the first page switching way, the user may click on the page display control 323. After the user clicks the page display control 323, the mobile phone may be switched from displaying the chat page 331 to displaying the chat page 332.

In the second page switching way, the user may directly slide leftward and rightward on the chat page 331. For example, the page display control 323 is the second control on the right side of the page display control 321. Then, the user may drag the chat page 331 to slide leftwards twice to switch from the chat page 331 to the chat page 332 for display.

After the mobile phone is switched from the chat page 331 to the chat page 332, the user may switch back to the chat page 331 by a similar operation, or switch to the chat page corresponding to the page display control 322. The number of switching performed by the user is not limited in the present disclosure.

Subsequently, if the user wants to exit the current chat page, the user may click on a blank area in the virtual system bar 320. Then, the operating system closes the virtual system bar 320 and the chat page at this time, and redisplays the last page displayed on the mobile phone screen when the hint control 310 is displayed.

In summary, there is provided a method for switching pages in the example of the present disclosure. By displaying the virtual system bar and the first application page for displaying the first unread message for the first application, when a second unread message exists in the at least one second application, the page display control is displayed in the virtual system bar, and the first signal generated in accordance with the first designated operation performed on the page display control is received. The first application page is switched into the second application page which corresponds to the page display control and serves to display the second unread message for display. Since the virtual system bar is displayed together with the first application page and the page display control of the second application page is displayed in the virtual system bar, the user may directly switch from the first application page of the first application to the second application page of the second application, thereby saving the multi-step operation of switching application pages across applications for the user, improving the efficiency of the user in viewing unread messages for different applications, and also improving the switching efficiency among pages of different applications.

In addition, in the present disclosure, when the first unread message is received, the hint control is displayed on the side of the screen and the hint control is displayed in accordance with the display element of the first application, thereby improving the recognition of the first application, facilitating the user to directly determine the application sending the unread message, the contact and the content of the unread message, helping the user determine whether to open and make a reply, and improving the efficiency of the user to process the unread message.

In addition, the resident display time and the display position of the hint control may be set by the user, which improves the convenience of control by the user with fingers.

In addition, by receiving a signal generated in accordance with the fifth designated operation performed on the currently displayed application page, the selected control is determined, and the currently display application page is switched into the application page corresponding to the selected control for display. Because the currently displayed application page is relatively large in area and easily controlled by the user, the difficulty of the user in switching the pages is reduced and the operability of switching the pages is improved.

In addition, the currently displayed application page is switched into a start page for display by receiving the third designated operation performed on the virtual system bar, the efficiency of the mobile phone to return to the page before the unread message is displayed is improved.

Further, when the virtual system bar is a displayed virtual bar other than the status bar and the navigation bar, the operating system may execute a method for displaying a page in full screen after Step 203 in Fig. 2 in order to provide more display space for the first application page or the second application page in the example of the present disclosure.

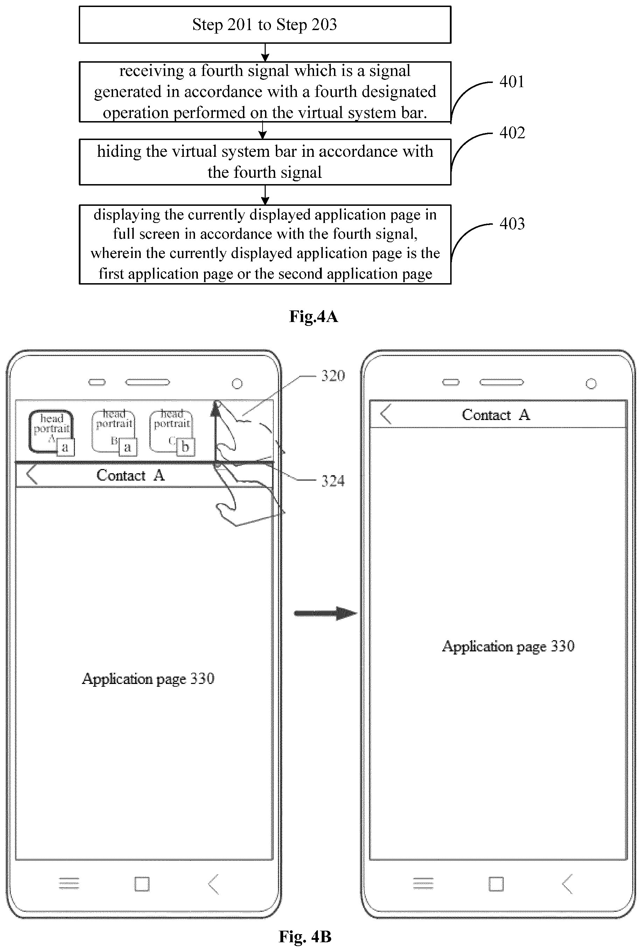

Referring to Fig. 4A, which is a flow chart of a method for displaying a page in full screen provided in an example of the present disclosure. The method for switching pages may be applied in the terminal device above. As shown in Fig. 4A, the method for displaying a page in full screen may include the following steps.

In Step 401, a fourth signal is received, where the fourth signal is a signal generated in accordance with a fourth designated operation performed on the virtual system bar.

In the present disclosure, the operating system receives the fourth signal generated in accordance with the fourth designated operation. The fourth designated operation may be an operation on a common border between the virtual system bar and the application page, or an operation on a full-screen display control set in the virtual system bar. It should be noted that the full-screen display control may be set optionally in accordance with actual situations. That is, there may be no full-screen display control in the virtual system bar.

In some examples, when the fourth designated operation is an operation on the common border between the virtual system bar and the application page, the fourth designated operation may be an operation of dragging to the side of the virtual system bar until to reach the upper border of the screen.

In some examples, when the fourth designated operation is an operation on the full-screen display control in the virtual system bar, the fourth operation may be a click (short press) operation, a long press operation, a slide operation, and the like.

In some examples, the fourth operation may also be an operation on the virtual system bar, such as dragging to slide leftwards, rightwards, upwards or in other designated directions in the blank area of the virtual system bar.

In Step 402, the virtual system bar is hidden in accordance with the fourth signal.

After receiving the fourth signal, the operating system hides the virtual system bar in accordance with the fourth signal.

In Step 403, the currently displayed application page is displayed in full screen in accordance with the fourth signal, where the currently displayed application page is the first application page or the second application page.

In the present disclosure, the operating system displays the currently displayed application page in full screen in accordance with the fourth signal, where the currently displayed application page is the first application page or the second application page.

Referring to Fig. 4B, which is a schematic diagram of displaying a page in full screen based on the example shown in Fig. 4A. In Fig. 4B, the user drags the common border 324 between the virtual system bar 320 and the application page 330 upwards until to reach the upper border of the screen, and then the virtual system bar 320 on the screen is closed, and the application page 330 is displayed in full screen.

In summary, there is provided a method for displaying a page in full screen in the present disclosure. By receiving the fourth signal generated in accordance with the fourth designated operation performed on the virtual system bar, the virtual system bar is hidden so as to display the currently displayed application page in full screen. The currently displayed application page is the first application page or the second application page. In this way, the application page is provided with relative large display space when the screen display space is limited, which facilitates the user to view and control the application page displayed in full screen and improves the operability of the application page.

Further, in the present disclosure, in order to allow the user to display at least two application pages at the same time in the same terminal device, there is further provided a method for displaying application pages in multiple screens. This method may be performed after Step 203 shown in Fig. 2. The operating system may display at least two application pages in at least two application pages respectively. For example, the operating system may display three application pages, four application pages or five application pages side by side in one screen. The number of the application pages displayed side by side is not limited in the present disclosure.

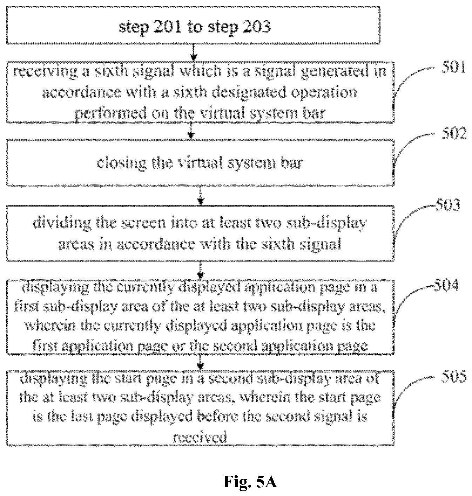

Referring to Fig. 5A, which is a flow chart of a method for displaying pages in multiple screens provided in the example of the present disclosure. This method may be applied in the terminal device. As shown in Fig. 5A, the method may include the following steps.

In Step 501, a sixth signal is received, where the sixth signal is a signal generated in accordance with a sixth designated operation performed on the virtual system bar.

In the example of the present disclosure, the operating system receives the sixth signal generated in accordance with the sixth designated operation. The sixth designated operation may be an operation on a common border between the virtual system bar and the application page, or an operation on a display control for dividing screen set in the virtual system bar. It should be noted that the display control for dividing screen may be set optionally in accordance with actual situations. That is, there may be no display control for dividing screen in the virtual system bar.

In Step 502, the virtual system bar is closed.

In the example of the present disclosure, the operating system may close the virtual system bar so as to save the display controls for the screen after the screen is divided.

In the example of the present disclosure, the operating system may also add the page display control displayed in the virtual system bar to the status bar.

In some examples, the operating system may also add the page display control displayed in the virtual system bar to the navigation bar.

In Step 503, the screen is divided into at least two sub-display areas in accordance with the sixth signal.

In the example of the present disclosure, the operating system may divide the screen into at least two sub-display areas in accordance with the sixth signal. In some examples, the sub-display areas may be two, three or more blocks, which is not limited in the present disclosure.

In Step 504, the currently displayed application page is displayed in a first sub-display area of the at least two sub-display areas. The currently displayed application page is the first application page or the second application page.

In Step 505, the start page is displayed in a second sub-display area of the at least two sub-display areas. The start page is the last page displayed before the second signal is received.

In the example of the present disclosure, the operating system displays the first application page or the second application page in one of the at least two sub-display areas and displays the start page in the other one. In some examples, if there are other sub-display pages displayed in the operating system, the operating system may display the content to be displayed in the other sub-display pages.

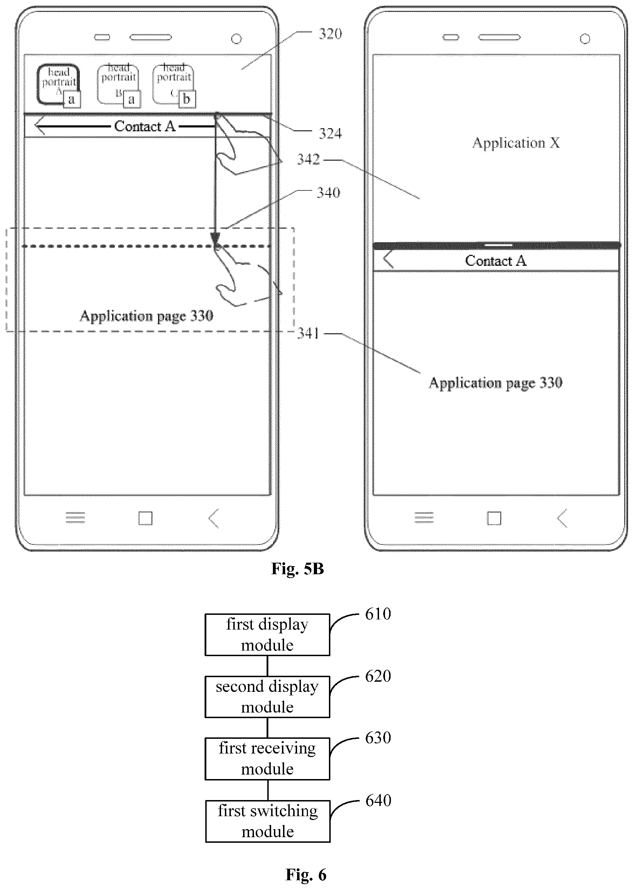

Referring to Fig. 5B, which is a schematic diagram of displaying pages in multiple screens based on the example shown in Fig. 5A. In Fig. 5B, the user drags the common border 324 between the virtual system bar 320 and the application page 330 downwards to a predetermined area 340 in the middle of the screen. The common border stays in the predetermined area 340 and the common border is taken as a dividing line to divide the screen into the first sub-display area 341 and the second sub-display area 342. At the same time, the operating system closes the virtual system bar 320.

In summary, there is provided a method for displaying pages in multiple screens in the example of the present disclosure. By receiving the sixth signal generated in accordance with the sixth designated operation performed on the virtual system bar, the virtual system bar is closed and the screen is divided into at least two sub-display areas. The currently displayed application page is displayed in the first sub-display area of the at least two sub-display areas, and the start page is displayed in the second sub-display area of the at least two sub-display areas. In this way, the mobile phone of the terminal device may display both the start page and the currently displayed application page at the same time, thereby improving the efficiency of the user in processing matters in the start page and the currently displayed application page at the same time and improving the capability of the terminal device to display pages in parallel.

Referring to Fig. 6, which is a block diagram of a device for switching pages shown in accordance with an example. The function of the device may be implemented by pure hardware or by software executed by hardware to complete the steps in Fig. 1, Fig. 2, Fig. 4A or Fig. 5A. A shown in Fig. 6, the device may include a first display module 610, a second display module 620, a first receiving module 630 and a first switching module 640.

The first display module 610 is configured to display a virtual system bar and a first application page of a first application. The virtual system bar is a bar-shaped display area located on an edge of a screen, and the first application page is used to display a first unread message for the first application.

The second display module 620 is configured to display a page display control in the virtual system bar when a second unread message exists in at least one second application. The page display control corresponds to a second contact who sends the second unread message.

The first receiving module 630 is configured to receive a first signal which is a signal generated in accordance with a first designated operation performed on the page display control.

The first switching module 640 is configured to switch the first application page into a second application page corresponding to the page display control in accordance with the first signal for display. The second application page is used to display the second unread message corresponding to the page display control.

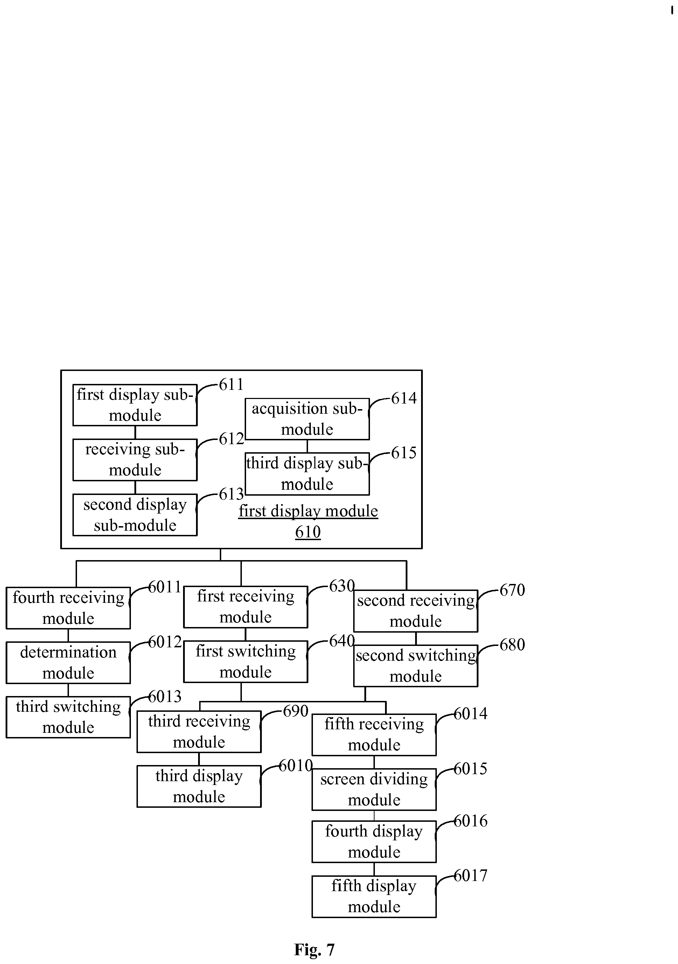

Further, referring to Fig. 7, which shows a block diagram of a device for switching pages provided in an example of the present disclosure. In combination with Fig. 6, in the device shown in Fig. 7:

The first display module 610 includes a first display sub-module 611, a receiving sub-module 612 and a second display sub-module 613.

The first display sub-module 611 is configured to display a hint control on a side of the screen when the first unread message is received. The hint control is used to indicate that the first unread message exists in the first application.

The receiving sub-module 612 is configured to receive a second signal which is a signal generated in accordance with a second designated operation performed on the hint. control

The second display sub-module 613 is configured to display the virtual system bar and the first application page in accordance with the second signal.

In some examples, the device further includes: a duration acquisition module 650 and a control hiding module 660.

The duration acquisition module 650 is configured to acquire a displayed duration of the hint control. The displayed duration is used to indicate a time duration that has elapsed from a moment when the hint control starts to be displayed to a current system time.

The control hiding module 660 is configured to hide the hint control when the displayed duration is not less than a predetermined duration.

In some examples, the first display module 610 includes: an acquisition sub-module 614 and a third display sub-module 615.

The acquisition sub-module 614 is configured to acquire a display element corresponding to the first application. The display element comprises at least one of a background picture of a designated shape and a background character string.

The third display sub-module 615 is configured to display the hint control on the side of the screen in accordance with the display element.

In some examples, the hint control in the first display module 610 includes an icon of a first contact, an identifier of the first application, and all or part of the content of the first unread message, and the first contact sends the first unread message.

In some examples, the virtual system bar and the currently displayed application page are displayed side by side. The device further includes: a second receiving module 670 and a second switching module 680.

The second receiving module 670 is configured to receive a third signal which is a signal generated in accordance with a third designated operation performed on the virtual system bar.

The second switching module 680 is configured to switch a currently displayed application page into a start page in accordance with the third signal for display. The start page is the last page displayed before the second signal is received, and the currently displayed application page is the first application page or the second application page.

In some examples, the device further includes: a third receiving module 690 and a third display module 6010.

The third receiving module 690 is configured to receive a fourth signal which is a signal generated in accordance with a fourth designated operation performed on the virtual system bar.

The third display module 6010 is configured to display the currently displayed application page in full screen in accordance with the fourth signal. The currently displayed application page is the first application page or the second application page.

In some examples, the device further includes: a fourth receiving module 6011, a determination module 6012 and a third switching module 6013.

The fourth receiving module 6011 is configured to receive a fifth signal which is a signal generated in accordance with a fifth designated operation performed on the currently displayed application page.

The determination module 6012 is configured to determine a selected control in accordance with the fifth signal. The selected control is any page display control in the virtual system bar except the page display control corresponding to the currently displayed application page.

The third switching module 6013 is configured to switch the currently displayed application page into an application page corresponding to the selected control for display.

In some examples, the device further includes:
a fifth receiving module 6014 configured to receive a sixth signal which is a signal generated in accordance with a sixth designated operation performed on the virtual system bar;
a screen dividing module 6015 configured to divide the screen into at least two sub-display areas in accordance with the sixth signal;
a fourth display module 6016 configured to display the currently displayed application page in a first sub-display area of the at least two sub-display areas, where the currently displayed application page is the first application page or the second application page; and
a fifth display module 6017 configured to display the start page in a second sub-display area of the at least two sub-display areas, where the start page is the last page displayed before the second signal is received.

In some examples, the device further includes a closing module 6018, a first adding module 6019 and a second adding module 6020.

The closing module 6018 is configured to close the virtual system bar, where the virtual system bar is a virtual bar other than a status bar or a navigation bar.

The first adding module 6019 is configured to add the page display control displayed in the virtual system bar to the status bar.

The second adding module 6020 is configured to add the page display control displayed in the virtual system bar to the navigation bar.

For details, please refer to the above method examples.

There is further provided a device for switching pages in an example of the present disclosure. The device may implement the method for switching pages in the present disclosure. The device includes: a processor, and a memory for storing instructions executable by the processor. The processor is configured to:
display a virtual system bar and a first application page of a first application, where the virtual system bar is a bar-shaped display area located on an edge of a screen, and the first application page is used to display a first unread message for the first application;
display a page display control in the virtual system bar when a second unread message exists in at least one second application, where the page display control corresponds to a second contact who sends the second unread message;
receive a first signal which is a signal generated in accordance with a first designated operation performed on the page display control; and
switch the first application page into a second application page corresponding to the page display control in accordance with the first signal for display, where the second application page is used to display the second unread message corresponding to the page display control.

In some examples, displaying the virtual system bar and the first application page of the first application includes:
displaying a hint control on a side of the screen when the first unread message is received, where the hint control is used to indicate that the first unread message exists in the first application;
receiving a second signal which is a signal generated in accordance with a second designated operation performed on the hint control; and
displaying the virtual system bar and the first application page in accordance with the second signal.

In some examples, the processor is configured to:
acquire a displayed duration of the hint control, where the displayed duration is used to indicate a time duration that has elapsed from a moment when the hint control starts to be displayed to a current system time; and
hide the hint control when the displayed duration is not less than a predetermined duration.

In some examples, the processor is configured to:
acquire a display element corresponding to the first application, where the display element comprises at least one of a background picture of a designated shape and a background character string; and
display the hint control on the side of the screen in accordance with the display element.

In some examples, the hint control includes an icon of a first contact, an identifier of the first application, and all or part of content of the first unread message, and the first contact sends the first unread message.

In some examples, the processor is configured to:
receive a third signal which is a signal generated in accordance with a third designated operation performed on the virtual system bar; and
switch a currently displayed application page into a start page in accordance with the third signal for display, where the start page is the last page displayed before the second signal is received, and the currently displayed application page is the first application page or the second application page.

In some examples, the virtual system bar and the currently displayed application page are displayed side by side and the processor is further configured to:
receive a fourth signal which is a signal generated in accordance with a fourth designated operation performed on the virtual system bar; and
display the currently displayed application page in full screen in accordance with the fourth signal, where the currently displayed application page is the first application page or the second application page.

In some examples, the processor is further configured to:
receive a fifth signal which is a signal generated in accordance with a fifth designated operation performed on the currently displayed application page;
determine a selected control in accordance with the fifth signal, where the selected control is any page display control in the virtual system bar except the page display control corresponding to the currently displayed application page; and
switch the currently displayed application page into an application page corresponding to the selected control for display.

In some examples, the processor is further configured to:
receive a sixth signal which is a signal generated in accordance with a sixth designated operation performed on the virtual system bar;
divide the screen into at least two sub-display areas in accordance with the sixth signal;
display the currently displayed application page in a first sub-display area of the at least two sub-display areas, where the currently displayed application page is the first application page or the second application page; and
display the start page in a second sub-display area of the at least two sub-display areas, where the start page is the last page displayed before the second signal is received.

In some examples, when the virtual system bar is a virtual bar other than a status bar or a navigation bar, the processor is further configured to:
close the virtual system bar; or
add the page display control displayed in the virtual system bar to the status bar; or
add the page display control displayed in the virtual system bar to the navigation bar.

It should be noted that the device for switching pages provided in the above example is exemplified only by the above division of each of the functional modules. In practice, the above-described functions may be assigned and completed by different functional modules in accordance with requirements, such that the internal structure of the device may be divided into different functional modules to complete all or part of the functions described above.

With respect to the device of the above example, the specific method of operation performed by each module has been described in details in the example of the method, and the description thereof may not be described in details herein.

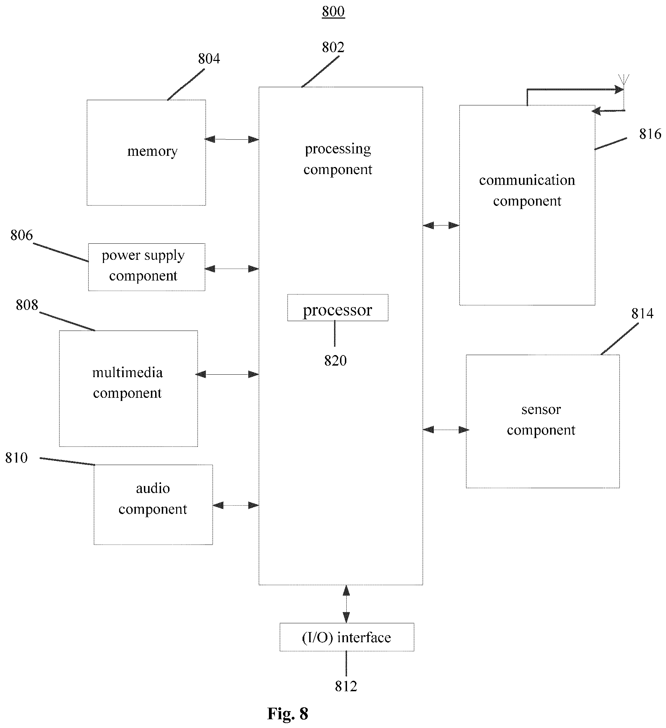

Referring to Fig. 8, which shows a block diagram of a device 800 provided in an example. For example, the device 800 may be terminal device. As shown in Fig. 8, the device 800 may include one or more of the following components: a processing component 802, a memory 804, a power supply component 806, a multimedia component 808, an audio component 810, an input/output (I/O) interface 812, a sensor component 814, and a communication component 816.

The processing component 802 generally may control the overall operation of the device 800, such as operations associated with display, phone call, data communication, camera operation, and recording operation. The processing component 802 may include one or more processors 820 to execute instructions, to complete all or part of the steps described above. In addition, the processing component 802 may include one or more modules to facilitate the interactions between the processing component 802 and other components. For example, the processing component 802 may include a multimedia module to facilitate interaction between the multimedia component 808 and the processing component 802.

The memory 804 may be configured to store various types of data to support the operation of the device 800. Examples of such data may include instructions of any application or method operating on the device 800, contact data, phonebook data, messages, pictures, videos, and the like. The memory 804 may be implemented by any type of volatile or nonvolatile memory device or a combination thereof, such as static random access memory (SRAM), electrically erasable programmable read only memory (EEPROM), erasable programmable read only memory (EPROM), programmable read only memory (PROM), read only memory (ROM), magnetic memory, flash memory, disk or CD.

The power supply component 806 may provide power to the various components of the device 800. The power supply component 806 may include a power management system, one or more power supplies, and other components associated with generating, managing, and distributing power for the device 800.

The multimedia component 808 may include a screen providing an output interface between the device 800 and the user. In some examples, the screen may include a liquid crystal display (LCD) and a touch panel (TP). If the screen includes a touch panel, the screen may be implemented as a touch screen to receive input signals from the user. The touch panel may include one or more touch sensors to sense touches, slides, and gestures on touch panels. The touch sensors may sense not only the boundary of the touch or slide actions, but also the duration and pressure associated with the touch or slide operation. In some examples, the multimedia component 808 may include a front camera and/or a rear camera. When the device 800 is at an operating mode, such as a shooting mode or a video mode, the front camera and/or the rear camera may receive external multimedia data. Each front camera and rear camera may be a fixed optical lens system or have focal length and optical zoom capability.

The audio component 810 may be configured to output and/or input an audio signal. For example, the audio component 810 may include a microphone (MIC) that is configured to receive external audio signals when the device 800 is in the operating mode, such as a call mode, a recording mode, and a voice recognition mode. The received audio signals may be further stored in the memory 804 or transmitted via the communication component 816. In some examples, the audio component 810 may also include a speaker for outputting the audio signals.

The I/O interface 812 may provide the interface between the processing component 802 and a peripheral interface module. The peripheral interface module may be a keyboard, a mouse, buttons, or the like. The buttons may include, but are not limited to, a home button, a volume button, a start button, and a lock button.

The sensor component 814 may include one or more sensors for providing condition assessments of the various aspects of the device 800. For example, the sensor component 814 may detect the on/off state of the device 800, the relative positioning of the components, such as the components may be the display and keypad of the device 800, and the sensor component 814 may also detect position changes of the device 800 or any component thereof, presence or absence of the user contact with the device 800, orientation, acceleration/deceleration, or the temperature changes of the device 800. The sensor component 814 may include a proximity sensor configured to detect the presence of a nearby object without any physical contact. The sensor component 814 may also include a light sensor, such as a CMOS or CCD image sensor, for imaging applications. In some examples, the sensor component 814 may also include acceleration sensors, gyro sensors, magnetic sensors, pressure sensors, or temperature sensors.

The communication component 816 may be configured to facilitate wired or wireless communication between the device 800 and other devices. The device 800 may access a wireless network based on a communication standard, such as WiFi, 2G or 3G, or a combination thereof. In an example, the communication component 816 may receive broadcast signals or broadcast-related information from an external broadcast management system via broadcast channels. In an example, the communication component 816 may also include a near field communication (NFC) module to facilitate short-range communication. For example, the NFC module may be implemented based on radio frequency identification (RFID) technology, infrared data association (IrDA) technology, ultra wideband (UWB) technology, Bluetooth (BT) technology and other techniques.

In an example, the device 800 may be implemented by one or more application specific integrated circuits (ASICs), digital signal processors (DSPs), digital signal processing devices (DSPDs), programmable logic devices (PLDs), field programmable gate array (FPGA), a controller, a microcontroller, a microprocessor, or other electronic components for performing the method described above.

Persons of ordinary skill in the art may understand that all or part of the steps to switch pages described in the above examples may be completed through hardware, or through relevant software instructed by application stored in a storage device. The storage device may include a computer readable storage medium, such as a read-only memory, solid state drives (SSD), a flash, a floppy disk or a CD, etc. When the instruction in the computer readable storage medium is executed by the processor 820 of the terminal device, it causes to perform the method for switching pages described above.

The technical solutions of the present disclosure may have the following advantageous benefits: by displaying the virtual system bar and the first application page for displaying the first unread message for the first application, when a second unread message exists in the at least one second application, the page display control is displayed in the virtual system bar, and the first signal generated in accordance with the first designated operation performed on the page display control is received. The first application page is switched into the second application page which corresponds to the page display control and serves to display the second unread message for display. Since the virtual system bar is displayed together with the first application page and the page display control of the second application page is displayed in the virtual system bar, the user may directly switch from the first application page of the first application to the second application page of the second application, thereby saving the multi-step operation of switching application pages across applications for the user, and improving the switching efficiency among pages of different applications.

The present disclosure may include dedicated hardware implementations such as application specific integrated circuits, programmable logic arrays and other hardware devices. The hardware implementations can be constructed to implement one or more of the methods described herein. Applications that may include the apparatus and systems of various examples can broadly include a variety of electronic and computing systems. One or more examples described herein may implement functions using two or more specific interconnected hardware modules or devices with related control and data signals that can be communicated between and through the modules, or as portions of an application-specific integrated circuit. Accordingly, the computing system disclosed may encompass software, firmware, and hardware implementations. The terms "module," "sub-module," "circuit," "sub-circuit," "circuitry," "sub-circuitry," "unit," or "sub-unit" may include memory (shared, dedicated, or group) that stores code or instructions that can be executed by one or more processors.

Other examples of the present disclosure may be available to those skilled in the art upon consideration of the specification and practice disclosed herein. The present disclosure is intended to cover any variations, uses, or adaptations of the present disclosure following general principles of the present disclosure and include the common general knowledge or conventional technical means in the art without departing from the present disclosure. The specification and examples may be shown as illustrative only.

It is to be understood that this disclosure is not limited to the precise constructions described above and shown in the enclosed drawings, and various modifications and changes may be made without departing from the scope thereof. The scope of the present disclosure may be limited only by the appended claims.

## Claims

1. A method for switching pages of applications in a terminal device, comprising:
displaying a hint control (310) on a side of a screen of the terminal device when a first unread message is received, wherein the hint control is used to indicate that the first unread message exists in a first application, and the hint control comprises at least part of content of the first unread message;
receiving a second signal which is generated in accordance with a second designated operation performed on the hint control;
simultaneously displaying a virtual system bar (320) and a first application page of the first application on the terminal device in accordance with the second signal, wherein the virtual system bar is a display area located on an edge of a screen of the terminal device and is configured to display a first display control corresponding to a first contact who sends the first unread message, and the first application page is used to display full content of the first unread message for the first application;
displaying (102) a page display control (321, 322, 323), in addition to the first display control, in the virtual system bar when a second unread message exists in a second application, wherein the page display control corresponds to a second contact who sends the second unread message;
receiving (103) a first signal which is generated in accordance with a first designated operation performed on the page display control; and
switching (104) the first application page into a second application page corresponding to the page display control in accordance with the first signal for display, wherein the second application page is used to display full content of the second unread message corresponding to the page display control;
receiving a sixth signal which is generated in accordance with a sixth designated operation performed on the virtual system bar;
dividing the screen into at least two sub-display areas in accordance with the sixth signal, wherein the at least two sub-display areas comprise a first sub-display area and a second sub-display area;
displaying a currently displayed application page fully in the first sub-display area of the at least two sub-display areas, wherein the currently displayed application page is the first application page or the second application page; and
displaying a start page fully in the second sub-display area of the at least two sub-display areas, wherein the start page is a last page displayed before the second signal is received.

2. The method according to claim 1, further comprising:
acquiring a displayed duration of the hint control, wherein the displayed duration is used to indicate a time duration that has elapsed from a moment when the hint control starts to be displayed to a current system time; and
hiding the hint control when the displayed duration is not less than a predetermined duration.

3. The method according to claim 1, wherein displaying the hint control on the side of the screen of the terminal device comprises:
acquiring a display element corresponding to the first application, wherein the display element comprises at least one of: a background picture of a designated shape and a background character string; and
displaying the hint control on the side of the screen in accordance with the display element.

4. The method according to claim 1, wherein the hint control comprises an icon of a first contact and an identifier of the first application, wherein the first contact sends the first unread message.

5. The method according to claim 1, further comprising:
receiving a third signal which is generated in accordance with a third designated operation performed on the virtual system bar; and
switching a currently displayed application page into a start page in accordance with the third signal for display, wherein the start page is the last page displayed before the second signal is received, and the currently displayed application page is the first application page or the second application page.

6. The method according to claim 1, wherein the virtual system bar and the currently displayed application page are displayed side by side; and the method further comprises:
receiving a fourth signal which is generated in accordance with a fourth designated operation performed on the virtual system bar; and
displaying the currently displayed application page in full screen in accordance with the fourth signal, wherein the currently displayed application page is the first application page or the second application page.

7. The method according to claim 1, further comprising:
receiving a fifth signal which is generated in accordance with a fifth designated operation performed on the currently displayed application page;
determining a selected control in accordance with the fifth signal, wherein the selected control is one of the page display control in the virtual system bar except the page display control corresponding to the currently displayed application page; and
switching the currently displayed application page into an application page corresponding to the selected control for display.

8. The method according to claim 1 or 6, wherein when the virtual system bar is a virtual bar other than a status bar or a navigation bar, the method further comprises:
closing the virtual system bar; or
adding the page display control displayed in the virtual system bar to the status bar; or
adding the page display control displayed in the virtual system bar to the navigation bar.

9. A device for switching pages of applications, comprising
a first display module (610) configured to display a hint control (310) on a side of a screen of the terminal device when a first unread message is received, wherein the hint control is used to indicate that the first unread message exists in a first application, and the hint control comprises at least part of content of the first unread message; receive a second signal which is generated in accordance with a second designated operation performed on the hint control; and simultaneously display a virtual system bar (320)
and a first application page of the first application on the terminal device in accordance with the second signal, wherein the virtual system bar is a bar-shaped display area located on an edge of a screen of the terminal device and is configured to display a first display control (321, 322, 323)
corresponding to a first contact who sends the first unread message, and the first application page is used to display full content of the first unread message for the first application;
a second display module (620) configured to display a page display control, in addition to the first display control, in the virtual system bar when a second unread message exists in at least one second application, wherein the page display control corresponds to a second contact who sends the second unread message;
a first receiving module (630) configured to receive a first signal which is generated in accordance with a first designated operation performed on the page display control; and
a first switching module (640) configured to switch the first application page into a second application page corresponding to the page display control in accordance with the first signal for display, wherein the second application page is used to display full content of the second unread message corresponding to the page display control;
a fifth receiving module (6014) configured to receive a sixth signal which is generated in accordance with a sixth designated operation performed on the virtual system bar;
a screen dividing module (6015) configured to divide the screen into at least two sub-display areas in accordance with the sixth signal, wherein the at least two sub-display areas comprise a first sub-display area and a second sub-display area
a fourth display module (6016) configured to display a currently displayed application page fully in the first sub-display area of the at least two sub-display areas, wherein the currently displayed application page is the first application page or the second application page
a fifth display module (6017) configured to display a start page fully in the second sub-display area of the at least two sub-display areas, wherein the start page is a last page displayed before the second signal is received.

10. The device according to claim 9, further comprising:
a duration acquisition module (650) configured to acquire a displayed duration of the hint control, wherein the displayed duration is used to indicate a time duration that has elapsed from a moment when the hint control starts to be displayed to a current system time; and
a control hiding module (660) configured to hide the hint control when the displayed duration is not less than a predetermined duration.

11. The device according to claim 9, wherein the first display module (610) comprises:
an acquisition sub-module (614) configured to acquire a display element corresponding to the first application, wherein the display element comprises at least one of a background picture of a designated shape and a background character string; and
a third display sub-module (615) configured to display the hint control on the side of the screen in accordance with the display element.

12. A non-transitory computer-readable storage medium (804) having stored therein at least one instruction that may be loaded and executed by a processor (820) to implement:
displaying a hint control on a side of a screen of the terminal device when a first unread message is received, wherein the hint control is used to indicate that the first unread message exists in a first application, and the hint control comprises at least part of content of the first unread message;
receiving a second signal which is generated in accordance with a second designated operation performed on the hint control;
simultaneously displaying a virtual system bar and a first application page of the first application on the terminal device in accordance with the second signal, wherein the virtual system bar is a display area located on an edge of a screen of the terminal device and is configured to display a first display control corresponding to a first contact who sends the first unread message, and the first application page is used to display full content of the first unread message for the first application;
displaying (102) a page display control, in addition to the first display control, in the virtual system bar when a second unread message exists in a second application, wherein the page display control corresponds to a second contact who sends the second unread message;
receiving (103) a first signal which is generated in accordance with a first designated operation performed on the page display control; and
switching (104) the first application page into a second application page corresponding to the page display control in accordance with the first signal for display, wherein the second application page is used to display full content of the second unread message corresponding to the page display control;
receiving a sixth signal which is generated in accordance with a sixth designated operation performed on the virtual system bar;
dividing the screen into at least two sub-display areas in accordance with the sixth signal, wherein the at least two sub-display areas comprise a first sub-display area and a second sub-display area;
displaying a currently displayed application page fully in the first sub-display area of the at least two sub-display areas, wherein the currently displayed application page is the first application page or the second application page; and
displaying a start page fully in the second sub-display area of the at least two sub-display areas, wherein the start page is a last page displayed before the second signal is received.

## Patentansprüche

1. Verfahren zum Umschalten von Seiten von Anwendungen in einer Endgerätevorrichtung, umfassend:
Anzeigen einer Hinweissteuerung (310) an einer Seite eines Bildschirms der Endgerätevorrichtung, wenn eine erste ungelesene Nachricht empfangen wird, wobei die Hinweissteuerung verwendet wird, um anzugeben, dass es die erste ungelesene Nachricht in einer ersten Anwendung gibt, und die Hinweissteuerung mindestens einen Teil des Inhalts der ersten ungelesenen Nachricht umfasst;
Empfangen eines zweiten Signals, das gemäß einer zweiten festgelegten Operation erzeugt wird, die an der Hinweissteuerung durchgeführt wird;
gleichzeitig Anzeigen einer virtuellen Systemleiste (320) und einer ersten Anwendungsseite der ersten Anwendung auf der Endgerätevorrichtung gemäß dem zweiten Signal, wobei die virtuelle Systemleiste ein Anzeigebereich ist, der sich an einem Rand eines Bildschirms der Endgerätevorrichtung befindet und konfiguriert ist, um eine erste Anzeigesteuerung anzuzeigen, die einem ersten Kontakt entspricht, der die erste ungelesene Nachricht sendet, und die erste Anwendungsseite verwendet wird, um den vollständigen Inhalt der ersten ungelesenen Nachricht für die erste Anwendung anzuzeigen;
Anzeigen (102) einer Seitenanzeigesteuerung (321, 322, 323) zusätzlich zur ersten Anzeigesteuerung in der virtuellen Systemleiste, wenn es eine zweite ungelesene Nachricht in einer zweiten Anwendung gibt, wobei die Seitenanzeigesteuerung einem zweiten Kontakt entspricht, der die zweite ungelesene Nachricht sendet;
Empfangen (103) eines ersten Signals, das gemäß einer ersten festgelegten Operation erzeugt wird, die an der Seitenanzeigesteuerung durchgeführt wird; und
Umschalten (104) der ersten Anwendungsseite auf eine zweite Anwendungsseite, die der Seitenanzeigesteuerung entspricht, gemäß dem ersten Signal zur Anzeige, wobei die zweite Anwendungsseite verwendet wird, um den vollständigen Inhalt der zweiten ungelesenen Nachricht anzuzeigen, die der Seitenanzeigesteuerung entspricht;
Empfangen eines sechsten Signals, das gemäß einer sechsten festgelegten Operation erzeugt wird, die an der virtuellen Systemleiste durchgeführt wird;
Unterteilen des Bildschirms in mindestens zwei Unteranzeigebereiche gemäß dem sechsten Signal, wobei die mindestens zwei Unteranzeigebereiche einen ersten Unteranzeigebereich und einen zweiten Unteranzeigebereich umfassen;
Anzeigen einer aktuell angezeigten Anwendungsseite vollständig im ersten Unteranzeigebereich der mindestens zwei Unteranzeigebereiche, wobei die aktuell angezeigte Anwendungsseite die erste Anwendungsseite oder die zweite Anwendungsseite ist; und
Anzeigen einer Startseite vollständig im zweiten Unteranzeigebereich der mindestens zwei Unteranzeigebereiche, wobei die Startseite eine letzte Seite ist, die angezeigt wird, bevor das zweite Signal empfangen wird.

2. Verfahren nach Anspruch 1, weiter umfassend:
Erfassen einer angezeigten Dauer der Hinweissteuerung, wobei die angezeigte Dauer verwendet wird, um eine Zeitdauer anzugeben, die ab einem Moment, in dem die Hinweissteuerung beginnt, angezeigt zu werden, bis zu einer aktuellen Systemzeit verstrichen ist; und
Ausblenden der Hinweissteuerung, wenn die angezeigte Dauer nicht kleiner als eine vorbestimmte Dauer ist.

3. Verfahren nach Anspruch 1, wobei das Anzeigen der Hinweissteuerung an der Seite des Bildschirms der Endgerätevorrichtung umfasst:
Erfassen eines Anzeigeelements, das der ersten Anwendung entspricht, wobei das Anzeigeelement mindestens eines umfasst von: einem Hintergrundbild einer festgelegten Form und einer Hintergrundzeichenfolge; und
Anzeigen der Hinweissteuerung an der Seite des Bildschirms gemäß dem Anzeigeelement.

4. Verfahren nach Anspruch 1, wobei die Hinweissteuerung ein Symbol eines ersten Kontakts und eine Kennung der ersten Anwendung umfasst, wobei der erste Kontakt die erste ungelesene Nachricht sendet.

5. Verfahren nach Anspruch 1, weiter umfassend:
Empfangen eines dritten Signals, das gemäß einer dritten festgelegten Operation erzeugt wird, die an der virtuellen Systemleiste durchgeführt wird; und
Umschalten einer aktuell angezeigten Anwendungsseite auf eine Startseite gemäß dem dritten Signal zur Anzeige, wobei die Startseite die letzte Seite ist, die angezeigt wird, bevor das zweite Signal empfangen wird, und die aktuell angezeigte Anwendungsseite die erste Anwendungsseite oder die zweite Anwendungsseite ist.

6. Verfahren nach Anspruch 1, wobei die virtuelle Systemleiste und die aktuell angezeigte Anwendungsseite nebeneinander angezeigt werden; und das Verfahren weiter umfasst:
Empfangen eines vierten Signals, das gemäß einer vierten festgelegten Operation erzeugt wird, die an der virtuellen Systemleiste durchgeführt wird; und
Anzeigen der aktuell angezeigten Anwendungsseite im Vollbildmodus gemäß dem vierten Signal, wobei die aktuell angezeigte Anwendungsseite die erste Anwendungsseite oder die zweite Anwendungsseite ist.

7. Verfahren nach Anspruch 1, weiter umfassend:
Empfangen eines fünften Signals, das gemäß einer fünften festgelegten Operation erzeugt wird, die an der aktuell angezeigten Anwendungsseite durchgeführt wird;
Bestimmen einer ausgewählten Steuerung gemäß dem fünften Signal, wobei die ausgewählte Steuerung eine von der Seitenanzeigesteuerung in der virtuellen Systemleiste, mit Ausnahme der Seitenanzeigesteuerung ist, die der aktuell angezeigten Anwendungsseite entspricht; und
Umschalten der aktuell angezeigten Anwendungsseite auf eine Anwendungsseite, die der ausgewählten Steuerung zur Anzeige entspricht.

8. Verfahren nach Anspruch 1 oder 6, wobei, wenn die virtuelle Systemleiste eine andere virtuelle Leiste als eine Statusleiste oder eine Navigationsleiste ist, das Verfahren weiter umfasst:
Schließen der virtuellen Systemleiste; oder
Hinzufügen der in der virtuellen Systemleiste angezeigten Seitenanzeigesteuerung zur Statusleiste; oder Hinzufügen der in der virtuellen Systemleiste angezeigten Seitenanzeigesteuerung zur Navigationsleiste.

9. Vorrichtung zum Umschalten von Seiten von Anwendungen, umfassend ein erstes Anzeigemodul (610), das konfiguriert ist, um eine Hinweissteuerung (310) an einer Seite eines Bildschirms der Endgerätevorrichtung anzuzeigen, wenn eine erste ungelesene Nachricht empfangen wird, wobei die Hinweissteuerung verwendet wird, um anzugeben, dass es die erste ungelesene Nachricht in einer ersten Anwendung gibt, und die Hinweissteuerung mindestens einen Teil des Inhalts der ersten ungelesenen Nachricht umfasst; ein zweites Signal zu empfangen, das gemäß einer zweiten festgelegten Operation erzeugt wird, die an der Hinweissteuerung durchgeführt wird; und eine virtuelle Systemleiste (320) und eine erste Anwendungsseite der ersten Anwendung gemäß dem zweiten Signal gleichzeitig auf der Endgerätevorrichtung anzuzeigen, wobei die virtuelle Systemleiste ein leistenförmiger Anzeigebereich ist, der sich an einem Rand eines Bildschirms der Endgerätevorrichtung befindet und konfiguriert ist, um eine erste Anzeigesteuerung (321, 322, 323) anzuzeigen, die einem ersten Kontakt entspricht, der die erste ungelesene Nachricht sendet, und die erste Anwendungsseite verwendet wird, um den vollständigen Inhalt der ersten ungelesenen Nachricht für die erste Anwendung anzuzeigen;
ein zweites Anzeigemodul (620), das konfiguriert ist, um zusätzlich zur ersten Anzeigesteuerung eine Seitenanzeigesteuerung in der virtuellen Systemleiste anzuzeigen, wenn es in mindestens einer zweiten Anwendung eine zweite ungelesene Nachricht gibt, wobei die Seitenanzeigesteuerung einem zweiten Kontakt entspricht, der die zweite ungelesene Nachricht sendet;
ein erstes Empfangsmodul (630), das konfiguriert ist, um ein erstes Signal zu empfangen, das gemäß einer ersten festgelegten Operation erzeugt wird, die an der Seitenanzeigesteuerung durchgeführt wird; und
ein erstes Umschaltmodul (640), das konfiguriert ist, um die erste Anwendungsseite gemäß dem ersten Signal zur Anzeige auf eine zweite Anwendungsseite umzuschalten, die der Seitenanzeigesteuerung entspricht, wobei die zweite Anwendungsseite verwendet wird, um den vollständigen Inhalt der zweiten ungelesenen Nachricht anzuzeigen, die der Seitenanzeigesteuerung entspricht;
ein fünftes Empfangsmodul (6014), das konfiguriert ist, um ein sechstes Signal zu empfangen, das gemäß einer sechsten festgelegten Operation erzeugt wird, die an der virtuellen Systemleiste durchgeführt wird;
ein Bildschirmunterteilungsmodul (6015), das konfiguriert ist, um den Bildschirm gemäß dem sechsten Signal in mindestens zwei Unteranzeigebereiche zu unterteilen, wobei die mindestens zwei Unteranzeigebereiche einen ersten Unteranzeigebereich und einen zweiten Unteranzeigebereich umfassen, ein viertes Anzeigemodul (6016), das konfiguriert ist, um eine aktuell angezeigte Anwendungsseite vollständig im ersten Unteranzeigebereich der mindestens zwei Unteranzeigebereiche anzuzeigen, wobei die aktuell angezeigte Anwendungsseite die erste Anwendungsseite oder die zweite Anwendungsseite ist, ein fünftes Anzeigemodul (6017), das konfiguriert ist, um eine Startseite vollständig im zweiten Unteranzeigebereich der mindestens zwei Unteranzeigebereiche anzuzeigen, wobei die Startseite eine letzte Seite ist, die angezeigt wird, bevor das zweite Signal empfangen wird.

10. Vorrichtung nach Anspruch 9, weiter umfassend:
ein Dauererfassungsmodul (650), das konfiguriert ist, um eine angezeigte Dauer der Hinweissteuerung zu erfassen, wobei die angezeigte Dauer verwendet wird, um eine Zeitdauer anzugeben, die ab einem Moment, in dem die Hinweissteuerung beginnt, angezeigt zu werden, bis zu einer aktuellen Systemzeit verstrichen ist; und
ein Steuerungsausblendemodul (660), das konfiguriert ist, um die Hinweissteuerung auszublenden, wenn die angezeigte Dauer nicht kleiner als eine vorbestimmte Dauer ist.

11. Vorrichtung nach Anspruch 9, wobei das erste Anzeigemodul (610) umfasst:
ein Erfassungsuntermodul (614), das konfiguriert ist, um ein Anzeigeelement zu erfassen, das der ersten Anwendung entspricht, wobei das Anzeigeelement mindestens eines von einem Hintergrundbild einer festgelegten Form und einer Hintergrundzeichenfolge umfasst; und
ein drittes Anzeigeuntermodul (615), das konfiguriert ist, um die Hinweissteuerung gemäß dem Anzeigeelement an der Seite des Bildschirms anzuzeigen.

12. Nichtflüchtiges computerlesbares Speichermedium (804), das darin gespeichert mindestens eine Anweisung aufweist, die von einem Prozessor (820) geladen und ausgeführt werden kann, um Folgendes zu implementieren:
Anzeigen einer Hinweissteuerung an einer Seite eines Bildschirms der Endgerätevorrichtung, wenn eine erste ungelesene Nachricht empfangen wird, wobei die Hinweissteuerung verwendet wird, um anzugeben, dass es die erste ungelesene Nachricht in einer ersten Anwendung gibt, und die Hinweissteuerung mindestens einen Teil des Inhalts der ersten ungelesenen Nachricht umfasst;
Empfangen eines zweiten Signals, das gemäß einer zweiten festgelegten Operation erzeugt wird, die an der Hinweissteuerung durchgeführt wird;
gleichzeitig Anzeigen einer virtuellen Systemleiste und einer ersten Anwendungsseite der ersten Anwendung auf der Endgerätevorrichtung gemäß dem zweiten Signal, wobei die virtuelle Systemleiste ein Anzeigebereich ist, der sich an einem Rand eines Bildschirms der Endgerätevorrichtung befindet und konfiguriert ist, um eine erste Anzeigesteuerung anzuzeigen, die einem ersten Kontakt entspricht, der die erste ungelesene Nachricht sendet, und die erste Anwendungsseite verwendet wird, um den vollständigen Inhalt der ersten ungelesenen Nachricht für die erste Anwendung anzuzeigen;
Anzeigen (102) einer Seitenanzeigesteuerung zusätzlich zur ersten Anzeigesteuerung in der virtuellen Systemleiste, wenn es eine zweite ungelesene Nachricht in einer zweiten Anwendung gibt, wobei die Seitenanzeigesteuerung einem zweiten Kontakt entspricht, der die zweite ungelesene Nachricht sendet;
Empfangen (103) eines ersten Signals, das gemäß einer ersten festgelegten Operation erzeugt wird, die an der Seitenanzeigesteuerung durchgeführt wird; und
Umschalten (104) der ersten Anwendungsseite auf eine zweite Anwendungsseite, die der Seitenanzeigesteuerung entspricht, gemäß dem ersten Signal zur Anzeige, wobei die zweite Anwendungsseite verwendet wird, um den vollständigen Inhalt der zweiten ungelesenen Nachricht anzuzeigen, die der Seitenanzeigesteuerung entspricht;
Empfangen eines sechsten Signals, das gemäß einer sechsten festgelegten Operation erzeugt wird, die an der virtuellen Systemleiste durchgeführt wird;
Unterteilen des Bildschirms in mindestens zwei Unteranzeigebereiche gemäß dem sechsten Signal, wobei die mindestens zwei Unteranzeigebereiche einen ersten Unteranzeigebereich und einen zweiten Unteranzeigebereich umfassen;
Anzeigen einer aktuell angezeigten Anwendungsseite vollständig im ersten Unteranzeigebereich der mindestens zwei Unteranzeigebereiche, wobei die aktuell angezeigte Anwendungsseite die erste Anwendungsseite oder die zweite Anwendungsseite ist; und
Anzeigen einer Startseite vollständig im zweiten Unteranzeigebereich der mindestens zwei Unteranzeigebereiche, wobei die Startseite eine letzte Seite ist, die angezeigt wird, bevor das zweite Signal empfangen wird.

## Revendications

1. Procédé de changement de pages d'applications dans un dispositif terminal, comprenant :
l'affichage d'une commande de suggestion (310) sur un côté d'un écran du dispositif terminal lorsqu'un premier message non lu est reçu, dans lequel la commande de suggestion est utilisée pour indiquer que le premier message non lu existe dans une première application, et la commande de suggestion comprend au moins une partie du contenu du premier message non lu ;
la réception d'un deuxième signal qui est généré conformément à une deuxième opération désignée effectuée sur la commande de suggestion ;
l'affichage simultané d'une barre de système virtuelle (320) et d'une première page d'application de la première application sur le dispositif terminal conformément au deuxième signal, dans lequel la barre de système virtuelle est une zone d'affichage située sur un bord d'un écran du dispositif terminal et est configurée pour afficher une première commande d'affichage correspondant à un premier contact qui envoie le premier message non lu, et la première page d'application est utilisée pour afficher le contenu complet du premier message non lu pour la première application ;
l'affichage (102) d'une commande d'affichage de page (321, 322, 323), en plus de la première commande d'affichage, dans la barre de système virtuelle lorsqu'un second message non lu existe dans une seconde application, dans lequel la commande d'affichage de page correspond à un second contact qui envoie le second message non lu ;
la réception (103) d'un premier signal qui est généré conformément à une première opération désignée effectuée sur la commande d'affichage de page ; et
le passage (104) de la première page d'application à une seconde page d'application correspondant à la commande d'affichage de page conformément au premier signal pour l'affichage, dans lequel la seconde page d'application est utilisée pour afficher le contenu complet du second message non lu correspondant à la commande d'affichage de page ;
la réception d'un sixième signal qui est généré conformément à une sixième opération désignée effectuée sur la barre de système virtuelle ;
la division de l'écran en au moins deux sous-zones d'affichage conformément au sixième signal, dans lequel les au moins deux sous-zones d'affichage comprennent une première sous-zone d'affichage et une seconde sous-zone d'affichage ;
l'affichage intégral d'une page d'application actuellement affichée dans la première sous-zone d'affichage parmi les au moins deux sous-zones d'affichage, dans lequel la page d'application actuellement affichée est la première page d'application ou la seconde page d'application ; et
l'affichage intégral d'une page de démarrage dans la seconde sous-zone d'affichage parmi les au moins deux sous-zones d'affichage, dans lequel la page de démarrage est une dernière page affichée avant la réception du deuxième signal.

2. Procédé selon la revendication 1, comprenant en outre :
l'acquisition d'une durée affichée de la commande de suggestion, dans lequel la durée affichée est utilisée pour indiquer une durée qui s'est écoulée entre un moment où la commande de suggestion commence à s'afficher et une heure système actuelle ; et
le masquage de la commande de suggestion lorsque la durée affichée n'est pas inférieure à une durée prédéterminée.

3. Procédé selon la revendication 1, dans lequel l'affichage de la commande de suggestion sur le côté de l'écran du dispositif terminal comprend :
l'acquisition d'un élément d'affichage correspondant à la première application, dans lequel l'élément d'affichage comprend au moins l'une parmi : une image d'arrièreplan d'une forme désignée et une chaîne de caractères d'arrière-plan ; et
l'affichage de la commande de suggestion sur le côté de l'écran conformément à l'élément d'affichage.

4. Procédé selon la revendication 1, dans lequel la commande de suggestion comprend une icône d'un premier contact et un identifiant de la première application, dans lequel le premier contact envoie le premier message non lu.

5. Procédé selon la revendication 1, comprenant en outre :
la réception d'un troisième signal qui est généré conformément à une troisième opération désignée effectuée sur la barre de système virtuelle ; et
le passage d'une page d'application actuellement affichée à une page de démarrage conformément au troisième signal pour l'affichage, dans lequel la page de démarrage est la dernière page affichée avant la réception du deuxième signal, et la page d'application actuellement affichée est la première page d'application ou la seconde page d'application.

6. Procédé selon la revendication 1, dans lequel la barre de système virtuelle et la page d'application actuellement affichée sont affichées côte à côte ; et le procédé comprend en outre :
la réception d'un quatrième signal qui est généré conformément à une quatrième opération désignée effectuée sur la barre de système virtuelle ; et
l'affichage de la page d'application actuellement affichée en plein écran conformément au quatrième signal, dans lequel la page d'application actuellement affichée est la première page d'application ou la seconde page d'application.

7. Procédé selon la revendication 1, comprenant en outre :
la réception d'un cinquième signal qui est généré conformément à une cinquième opération désignée effectuée sur la page d'application actuellement affichée ;
la détermination d'une commande sélectionnée conformément au cinquième signal, dans lequel la commande sélectionnée est l'une des commandes d'affichage de page dans la barre de système virtuelle, à l'exception de la commande d'affichage de page correspondant à la page d'application actuellement affichée ; et
le passage de la page d'application actuellement affichée à une page d'application correspondant à la commande sélectionnée pour l'affichage.

8. Procédé selon la revendication 1 ou 6, dans lequel lorsque la barre de système virtuelle est une barre virtuelle autre qu'une barre d'état ou une barre de navigation, le procédé comprend en outre :
la fermeture de la barre de système virtuelle ; ou
l'ajout de la commande d'affichage de page affichée dans la barre de système virtuelle à la barre d'état ; ou l'ajout de la commande d'affichage de page affichée dans la barre de système virtuelle à la barre de navigation.

9. Dispositif de changement de pages d'applications, comprenant
un premier module d'affichage (610) configuré pour afficher une commande de suggestion (310) sur un côté d'un écran du dispositif terminal lorsqu'un premier message non lu est reçu, dans lequel la commande de suggestion est utilisée pour indiquer que le premier message non lu existe dans une première application, et la commande de suggestion comprend au moins une partie du contenu du premier message non lu ; recevoir un deuxième signal qui est généré conformément à une deuxième opération désignée effectuée sur la commande de suggestion ; et afficher simultanément une barre de système virtuelle (320) et une première page d'application de la première application sur le dispositif terminal conformément au deuxième signal, dans lequel la barre de système virtuelle est une zone d'affichage en forme de barre située sur un bord d'un écran du dispositif terminal et est configurée pour afficher une première commande d'affichage (321, 322, 323) correspondant à un premier contact qui envoie le premier message non lu, et la première page d'application est utilisée pour afficher le contenu complet du premier message non lu pour la première application ;
un deuxième module d'affichage (620) configuré pour afficher une commande d'affichage de page, en plus de la première commande d'affichage, dans la barre de système virtuelle lorsqu'un second message non lu existe dans au moins une seconde application, dans lequel la commande d'affichage de page correspond à un second contact qui envoie le second message non lu ;
un premier module de réception (630) configuré pour recevoir un premier signal qui est généré conformément à une première opération désignée effectuée sur la commande d'affichage de page ; et
un premier module de changement (640) configuré pour passer de la première page d'application à une seconde page d'application correspondant à la commande d'affichage de page conformément au premier signal pour l'affichage, dans lequel la seconde page d'application est utilisée pour afficher le contenu complet du second message non lu correspondant à la commande d'affichage de page ;
un cinquième module de réception (6014) configuré pour recevoir un sixième signal qui est généré conformément à une sixième opération désignée effectuée sur la barre de système virtuelle ;
un module de division d'écran (6015) configuré pour diviser l'écran en au moins deux sous-zones d'affichage conformément au sixième signal, dans lequel les au moins deux sous-zones d'affichage comprennent une première sous-zone d'affichage et une seconde sous-zone d'affichage, un quatrième module d'affichage (6016) configuré pour afficher intégralement une page d'application actuellement affichée dans la première sous-zone d'affichage parmi les au moins deux sous-zones d'affichage, dans lequel la page d'application actuellement affichée est la première page d'application ou la seconde page d'application, un cinquième module d'affichage (6017) configuré pour afficher intégralement une page de démarrage dans la seconde sous-zone d'affichage parmi les au moins deux sous-zones d'affichage, dans lequel la page de démarrage est une dernière page affichée avant la réception du deuxième signal.

10. Dispositif selon la revendication 9, comprenant en outre :
un module d'acquisition de durée (650) configuré pour acquérir une durée affichée de la commande de suggestion, dans lequel la durée affichée est utilisée pour indiquer une durée qui s'est écoulée entre un moment où la commande de suggestion commence à s'afficher et une heure système actuelle ; et
un module de masquage de commande (660) configuré pour masquer la commande de suggestion lorsque la durée affichée n'est pas inférieure à une durée prédéterminée.

11. Dispositif selon la revendication 9, dans lequel le premier module d'affichage (610) comprend :
un sous-module d'acquisition (614) configuré pour acquérir un élément d'affichage correspondant à la première application, dans lequel l'élément d'affichage comprend au moins l'une parmi une image d'arrière-plan d'une forme désignée et une chaîne de caractères d'arrière-plan ; et
un troisième sous-module d'affichage (615) configuré pour afficher la commande de suggestion sur le côté de l'écran conformément à l'élément d'affichage.

12. Support de stockage non transitoire lisible par ordinateur (804) dans lequel est stockée au moins une instruction qui peut être chargée et exécutée par un processeur (820) pour mettre en oeuvre :
l'affichage d'une commande de suggestion sur un côté d'un écran du dispositif terminal lorsqu'un premier message non lu est reçu, dans lequel la commande de suggestion est utilisée pour indiquer que le premier message non lu existe dans une première application, et la commande de suggestion comprend au moins une partie du contenu du premier message non lu ;
la réception d'un deuxième signal qui est généré conformément à une deuxième opération désignée effectuée sur la commande de suggestion ;
l'affichage simultané d'une barre de système virtuelle et d'une première page d'application de la première application sur le dispositif terminal conformément au deuxième signal, dans lequel la barre de système virtuelle est une zone d'affichage située sur un bord d'un écran du dispositif terminal et est configurée pour afficher une première commande d'affichage correspondant à un premier contact qui envoie le premier message non lu, et la première page d'application est utilisée pour afficher le contenu complet du premier message non lu pour la première application ;
l'affichage (102) d'une commande d'affichage de page, en plus de la première commande d'affichage, dans la barre de système virtuelle lorsqu'un second message non lu existe dans une seconde application, dans lequel la commande d'affichage de page correspond à un second contact qui envoie le second message non lu ;
la réception (103) d'un premier signal qui est généré conformément à une première opération désignée effectuée sur la commande d'affichage de page ; et
le passage (104) de la première page d'application à une seconde page d'application correspondant à la commande d'affichage de page conformément au premier signal pour l'affichage, dans lequel la seconde page d'application est utilisée pour afficher le contenu complet du second message non lu correspondant à la commande d'affichage de page ;
la réception d'un sixième signal qui est généré conformément à une sixième opération désignée effectuée sur la barre de système virtuelle ;
la division de l'écran en au moins deux sous-zones d'affichage conformément au sixième signal, dans lequel les au moins deux sous-zones d'affichage comprennent une première sous-zone d'affichage et une seconde sous-zone d'affichage ;
l'affichage intégral d'une page d'application actuellement affichée dans la première sous-zone d'affichage parmi les au moins deux sous-zones d'affichage, dans lequel la page d'application actuellement affichée est la première page d'application ou la seconde page d'application ; et
l'affichage intégral d'une page de démarrage dans la seconde sous-zone d'affichage parmi les au moins deux sous-zones d'affichage, dans lequel la page de démarrage est une dernière page affichée avant la réception du deuxième signal.
